# EUROPÄISCHE PATENTSCHRIFT

(11) **EP 2 465 897 B1**
(45) Veröffentlichungstag und Bekanntmachung des Hinweises auf die Patenterteilung: **26.12.2012**
(21) Anmeldenummer: 12154807.7
(22) Anmeldetag: 09.07.2009
(51) Int. Cl.: C08K 5/5419, C08K 5/5425, C07F 7/18, C08F 230/08

(54) **Master-Kit enthaltend Silanolkondensationskatalysatoren zur Vernetzung von gefüllten und ungefüllten Polymer-Compounds**
Master kit containing silanol condensation catalysts for integrating filled and unfilled polymer compounds
Ensemble principal contenant des catalyseurs de condensation de silanol pour la réticulation de composés de polymère remplis et non remplis

(30) Priorität: 09.09.2008 DE 102008041918
(43) Veröffentlichungstag der Anmeldung: 20.06.2012
(62) Teilanmeldung aus: 09780355.5
(73) Patentinhaber: Evonik Degussa GmbH, 45128 Essen (DE)
(72) Erfinder: Weißenbach, Kerstin, Bridgewater, NJ New Jersey 08807 (US); Ioannidis, Aristidis, 79618 Rheinfelden (DE); Bielawski, Bastian, 79618 Rheinfelden (DE)

(56) Entgegenhaltungen:
- EP-A- 1 288 235
- EP-A- 1 318 526
- DE-A1- 19 848 351
- US-A1- 2008 317 990

## Beschreibung

Die Erfindung betrifft ein Master-Kit enthaltend eine Zusammensetzung einer organofunktionellen Silan-Verbindung, insbesondere einer einfach ungesättigten Silan-Verbindung, und einer ausgewählten organischen Säure oder einer eine ausgewählte organische Säure freisetzende Vorläuferverbindung, wie eine olefinische Silicium enthaltende Vorläuferverbindung einer ausgewählten organischen Säure, sowie Verfahren zur Herstellung von Polymercompounds, wie Granulaten und/oder Fertigprodukten, aus thermoplastischen Basispolymeren und/oder Monomeren und/oder Prepolymer der thermoplastischen Basispolymere unter Verwendung der Zusammensetzung, der ausgewählten organischen Säure oder der diese Säure freisetzenden Vorläuferverbindung. Ferner betrifft die Erfindung die hergestellten Polymere, gefüllten Kunststoffe, beispielsweise als Granulat, Fertigprodukt, Formkörper und/oder Artikel, wie Rohre oder Kabel.

Zur Herstellung von gefüllten und ungefüllten Polymercompounds, insbesondere von Polyethylen (PE) und dessen Co-Polymeren, ist es bekannt zur Vernetzung von silangepfropften oder silan-co-polymerisierten Polyethylenen als Silanolkondensationskatalysatoren Organozinn-Verbindungen oder aromatische Sulphonsäuren (Borealis Ambicat®) einzusetzen. Nachteilig bei den Organozinn-Verbindungen ist deren signifikante Toxizität, während die Sulphonsäuren sich durch ihren stechenden Geruch bemerkbar machen, der sich durch alle Prozessstufen bis in das Endprodukt fortsetzt. Durch reaktionsbedingte Nebenprodukte sind die mit Sulphonsäuren vernetzten Polymercompounds in der Regel nicht geeignet im Lebensmittelbereich oder im Bereich der Trinkwasserversorgung eingesetzt zu werden, beispielsweise zur Herstellung von Trinkwasserrohren. Übliche Zinn Silanolkondensationskatalysatoren sind Dibutylzinndilaurat (dibutyltindilaurate, DBTDL) und Dioctylzinndilaurat (diocytyltindilaurate, DOTL), die über ihre Koordinationssphäre als Katalysator wirken.

Es ist bekannt zur Herstellung von feuchtigkeitsvernetzbaren Polymeren Silane in Gegenwart von Radikalbildnern auf Polymerketten aufzupfropfen und nach der Formgebung die Feuchtigkeitsvernetzung in Gegenwart der genannten Silanhydrolysekatalysatoren und/oder Silanolkondensationskatalysatoren durchzuführen. Die Feuchtigkeitsvernetzung von Polymeren mit hydrolysierbaren ungesättigten Silanen wird weltweit zur Herstellung von Kabeln, Rohren, Schäumen usw. eingesetzt. Verfahren dieser Art sind unter den Namen Sioplas-Prozess (DE 19 63 571 C3, DE 21 51 270 C3, US 3,646,155) und Monosil-Prozess (DE 25 54 525 C3, US 4,117,195) bekannt. Während beim Monosil-Verfahren der Vernetzungskatalysator bereits beim ersten Verarbeitungsschritt zugesetzt wird, erfolgt beim Sioplas-Verfahren der Zusatz des Vernetzungskatalysators erst im nachfolgenden Schritt. Zudem können vinylfunktionelle Silane zusammen mit den Monomeren und/oder Prepolymeren direkt zu dem Basispolymer co-polymerisiert werden oder anschließend über Pfropfung auf die Polymerketten angekoppelt werden.

Die EP 207 627 offenbart weitere Zinn enthaltende Katalysatorsysteme und damit modifizierte Co-Polymere basierend auf der Reaktion von Dibutylzinnoxid mit Ethylen-Acrylsäure-Co-Polymeren. Die JP 58013613 verwendet Sn(Acetyl)₂ als Katalysator und die JP 05162237 lehrt die Verwendung von Zinn-, Zink- oder Kobaltcarboxylaten zusammen mit gebundenen Kohlenwasserstoff-Gruppen als Silanolkondensationskatalysatoren, wie Dioctylzinnmaleat, Monobutylzinnoxid, Dimethyloxybutylzinn oder Dibutylzinndiacetat. Die JP 3656545 setzt zur Vernetzung Zink und Aluminiumseifen, wie Zinkoctylat, Aluminiumlaurat ein. Die JP 1042509 offenbart zur Vernetzung von Silanen ebenfalls die Verwendung von organischen Zinn-Verbindungen, aber auch auf Titan-Chelat-Verbindungen basierende Alkyltitansäureester. Aus der JP09-040713 ist die Herstellung von mit Silanen modifizierten Polyolefinen mittels Umsetzung eines Polyolefins und zwei modifizierten Silanverbindungen unter Verwendung einer organischen Säure als Silanolkondensationskatalysator bekannt.

Aufgabe der vorliegenden Erfindung ist es neue Silanhydrolyse- und/oder Silanolkondensationskatalysatoren zu entwickeln, die die genannten Nachteile der bekannten Katalysatoren aus dem Stand der Technik nicht aufweisen und sich vorzugsweise mit silangepfropften, silan-co-polymerisierten Polymeren und/oder Monomeren oder Prepolymeren dispergieren oder homogenisieren lassen. Bevorzugt sind die Silanohydrolysekatalysatoren und/oder Silanolkondensationskatalysatoren wachsartig bis fest und/oder auf ein Trägermaterial aufgebracht.

Gelöst wird die Aufgabe durch das erfindungsgemäße Master-Kit entsprechend den Merkmalen des Anspruchs 1, und die erfindungsgemäßen Verfahren mit den Merkmalen des Anspruchs 4 und 5 sowie mit den erfindungsgemäßen Erzeugnissen, wie Polymeren, Polymercompounds, Produkten und dem Polymer-Kit entsprechend den Merkmalen der Patentansprüche 7, 8 und 9, als auch durch die Verwendung nach Anspruch 10. Bevorzugte Ausführungsformen sind den Unteransprüchen und der Beschreibung zu entnehmen.

Überraschenderweise wurde gefunden, dass bei Einsatz des erfindungsgemäßen Master-Kits sich in einfacher und wirtschaftlicher Weise mit thermoplastischen Basispolymeren, Monomeren und/oder Prepolymeren der Basispolymere Polymercompounds erzeugen lassen, welche die genannten Nachteile, wie Toxizität und Geruchsbeeinträchtigung, nicht aufweisen. Je nach Zusammensetzung werden in dem Verfahren zur Herstellung von Polymercompounds auch insgesamt keine Alkohole mehr freigesetzt.

Beispielsweise, wenn mindestens eine Silicium enthaltende Vorläuferverbindung der Myristinsäure mit einem entsprechenden carboxylsubstituierten Silan gepfropften Basispolymer vermischt wird und gegebenenfalls nach der Formgebung eine Vernetzung in Gegenwart von Feuchtigkeit erfolgt. Zusätzlich kann das Pfropfen oder Co-Polymerisieren in Gegenwart einer organofunktionellen Silan-Verbindung, wie einem ungesättigten Alkoxysilan der nachstehend beschriebenen allgemeinen Formel III, erfolgen.

Durch den Einsatz des erfindungsgemäßen Master-Kits können Zusammensetzungen erzeugt werden die als Komponenten der Gruppe a) mindestens eine Silicium enthaltende Vorläuferverbindung der Myristinsäure und/oder eine organo-funktionelle Silan-Verbindung und die als Komponenten der Gruppe b) Myristinsäure oder eine Myristinsäure enthaltende siliciumfreie Vorläuferverbindung enthält, wie ein Alkali- oder Erdalkalisalz dieser Säure, wie Natriummyristat, Magnesiumdimyristat; oder ein Anhydrid oder Ester, beispielsweise Triglyceride, wie sie in Fetten und Ölen vorkommen.

Gegenstand der Erfindung ist ein Master-Kit, insbesondere umfassend eine nachstehend beschriebene Zusammensetzung, wobei das Master-Kit als Komponente-A
- 0,1 bis 20 Gew.-%, insbesondere 0,1 bis 10 Gew.-%, bevorzugt 0,1 bis 5 Gew.-%, besonders bevorzugt 0,1 bis 3 Gew.-%, bevorzugt 0,5 bis 5 Gew.-% in der Komponente-A mindestens eine Silicium enthaltende Vorläuferverbindung der Myristinsäure oder mindestens Myristinsäure oder eine Myristinsäure enthaltende siliciumfreie Vorläuferverbindung, und ad 100 Gew.-% der Komponente-A ein Trägermaterial, oder
- in Alternativen zusätzlich einen Stabilisator einen Zusatzstoff oder Mischungen dieser ad 100 Gew.-% der Komponente-A enthält und
- gegebenenfalls als Komponente-B zu 60 bis 99,9 Gew.-% in der Komponente B eine organofunktionelle Silan-Verbindung der nachstehend definierten Formel III, wobei b, a, B, R⁴ und R⁵ wie nachstehend definiert sind, sowie
- gegebenenfalls zu 0,05 bis 10 Gew.-% einen Radikalbildner und
- gegebenenfalls zu 0,05 bis 10 Gew.-% mindestens einen Stabilisator und/oder
- zu 0,05 bis 99,99 Gew.-% mindestens ein Trägermaterial, Stabilisator, Zusatzstoff oder Mischungen dieser, als weitere Zusatzstoffe kommen Füllstoffe, Additive; oder Mischungen dieser in Betracht, wobei die Mengenangaben insgesamt 100 Gew.-% in der Komponente-B ergeben.

Besonders bevorzugte Zusammensetzungen enthalten als Komponenten mindestens eine organo-funktionelle Silan-Verbindung und ausgewählt aus der Gruppe der Säuren oder Vorläuferverbindungen der Säuren mindestens eine Silicium enthaltende Vorläuferverbindung der Laurinsäure und/oder Myristinsäure und/oder eine Myristinsäure enthaltende siliciumfreie Vorläuferverbindung.

Beispielsweise kann diese bevorzugte Zusammensetzung ein ungesättigtes Alkoxysilan der nachstehend beschriebenen allgemeinen Formel III, wie Vinylalkoxysilan, und eine Verbindung der nachstehend beschriebenen allgemeinen Formeln I und/oder II und/oder eine der im Folgenden genannten Fettsäuren enthalten.

Alternative bevorzugte Zusammensetzungen enthalten aus der Gruppe der Säureoder Vorläuferverbindungen der Säure mindestens eine Silicium enthaltende Vorläuferverbindung der Myristinsäure und/oder Myristinsäure und/oder eine Myristinsäure enthaltende siliciumfreie Vorläuferverbindung mindestens zwei der genannten Verbindungen, d.h. der Vorläuferverbindungen oder Säure, und gegebenenfalls mindestens eine organofunktionelle Silan-Verbindung. Ein Beispiel für eine derartige Zusammensetzung ist eine Silicium enthaltende Vorläuferverbindung der Myristinsäure und als zweiter Verbindung Myristinsäure . Ein weiteres Beispiel ist eine Zusammensetzung umfassend ein Tetracarboxysubstituiertes Silan, wie Tetramyristylsilan, Tetralaurylsilan oder entsprechend gemischte Silane oder Mischungen der Silane mit Myristinsäure.

Die Zusammensetzungen eignen sich zur Anwendung in einem Monosil-Verfahren, Sioplas-Verfahren mit thermoplastischen Basispolymeren oder einem Co-Polymerisationsverfahren mit Monomeren und/oder Prepolymeren von thermoplastischen Basispolymeren.

Als thermoplastische Basispolymere im Sinne der Erfindung werden insbesondere Acrylnitril-Butadien-Styrol (ABS), Polyamide (PA), Polymethylmethacrylat (PMMA), Polycarbonat (PC), Polyethylen (PE), Polypropylen (PP), Polystyrol (PS), Polyvinylchlorid (PVC) sowie die auf Ethylen-Einheiten basierenden Polymere Ethylen-Vinylacetat-Copolymere (EVA), EPDM oder EPM und/oder Celluloid oder silan-co-polymerisierte Polymere verstanden und als Monomere und/oder Prepolymere Vorläuferverbindungen dieser Basispolymere, wie Ethylen, Propylen. Weitere thermoplastische Basispolymerer sind nachfolgend genannt.

Insbesondere ist die Zusammensetzung im Wesentlichen wasserfrei, um eine ungewünschte Hydrolyse und/oder Kondensation vor der eigentlichen Verwendung im Monosil-, Sioplas-Prozess oder Co-Kondensationsverfahren zu unterbinden.

Als Komponente der Gruppe a) enthält die Zusammensetzung mindestens eine
i) Silicium enthaltende Vorläuferverbindung der Myristinsäure der allgemeinen Formel I und/oder II und/oder
ii) eine organofunktionelle Silan-Verbindung, die einem ungesättigten Alkoxysilan entspricht,
wobei i) der allgemeinen Formel I und/oder II entspricht,

(A)_{z}SiR²x(OR¹)_{4-z-x} (I)

(R¹O)_{3-y-u}(R²)ᵤ(A)_{y}Si-A-Si(A)_{y}(R²)ᵤ(OR¹)_{3-y-u} (II)

- wobei unabhängig voneinander z gleich 0, 1, 2 oder 3, x gleich 0, 1, 2 oder 3, y gleich 0, 1, 2 oder 3 und u gleich 0, 1, 2 oder 3 ist, mit der Maßgabe, dass in Formel I z+x kleiner gleich 3 ist und in Formel II y+u unabhängig kleiner gleich 2 ist, bevorzugt sind mit z = 1, x = 0 oder z = 0 und x = 1 die Tricarboxysilane der Formel I und/oder Tetracarboxysilane mit z = 0, x = 0, geeignet sind aber auch die Dicarboxysilane mit z = 1 und x = 1,
- mit A unabhängig voneinander in Formel I und/oder II für eine einwertige Olefin-Gruppe, wie insbesondere
- (R⁹)₂C=C(R⁹)-Mₖ-, worin R⁹ gleich oder verschieden sind und R⁹ ein Wasserstoffatom oder eine Methylgruppe oder eine Phenylgruppe ist, die Gruppe M eine Gruppe aus der Reihe -CH₂-, -(CH₂)₂-, -(CH₂)₃-, -O(O)C(CH₂)₃-oder -C(O)O-(CH₂)₃- darstellt, k gleich 0 oder 1 ist, wie Vinyl, Allyl, 3-Methaycryloxypropyl und/oder Acryloxypropyl, n-3-Pentenyl, n-4-Butenyl oder
- Isoprenyl, 3-Pentenyl, Hexenyl, Clyclohexenyl, Terpenyl, Squalanyl, Squalenyl, Polyterpenyl, Betulaprenoxy, cis/trans-Polyisoprenyl, oder
- R⁸-F_{g}-[C(R⁸)=C(R⁸)-C(R⁸)=C(R⁸)]ᵣ-F_{g}-, worin R⁸ gleich oder verschieden sind und R⁶ ein Wasserstoffatom oder eine Alkylgruppe mit 1 bis 3 C-Atomen oder eine Arylgruppe oder eine Aralkylgruppe, vorzugsweise eine Methylgruppe oder eine Phenylgruppe, bedeutet, Gruppen F gleich oder verschieden sind und F eine Gruppe aus der Reihe -CH₂-, -(CH₂)₂-, -(CH₂)₃-, -O(O)C(CH₂)₃-oder - C(O)O-(CH₂)₃- darstellt, r gleich 1 bis 100, insbesondere 1 oder 2, und g gleich 0 oder 1 sind, umfasst,
- und mit A als zweiwertiger Olefin-Rest in Formel II, wie die entsprechenden Alkenylene, beispielsweise 2-Pentenylen, 1,3-Butadienylen, iso-3-Butenylen, Pentenylen, Hexenylen, Hexendienylen, Clyclohexenylen, Terpenylen, Squalanylen, Squalenylen, Polyterpenylen, cis/trans-Polyisoprenylen,
- R¹ entspricht unabhängig voneinander einer Carbonyl-R³ Gruppe, d.h. einer -(CO)R³-Gruppe (-(C=O)-R³), so dass -OR¹ gleich -O(CO)R³ ist, wobei R³ einem von Myristinsäure abgeleiteten Kohlenwasserstoffrest entspricht. Also ist R³ in R¹ ein gesättigter KW-Rest -C₁₃H₂₇
- R² ist unabhängig von einander eine Kohlenwasserstoff-Gruppe, insbesondere eine substituierte oder unsubstituierte lineare, verzweigte und/oder cyclische Alkyl-, Alkenyl-, Alkylaryl-, Alkenylaryl- und/oder Aryl-Gruppe mit 1 bis 24 C-Atomen, bevorzugt mit 1 bis 18 C-Atomen. Insbesondere mit 1 bis 3 C-Atomen bei Alkyl-Gruppen. Als Alkyl-Gruppe eignen sich insbesondere Ethyl-, n-Propyl- und/oder i-Propyl-Gruppen. Als substituierte Kohlenwasserstoffe eignen sich insbesondere halogenierte Kohlenwasserstoffe, wie 3-Halogenpropyl-, beispielsweise 3-Chlorpropyl oder 3-Brompropyl-Gruppen, die gegebenenfalls einer nucleophilen Substitution zugänglich sind oder auch die Verarbeitbarkeit verbessern.

So können vorzugsweise auch Silicium enthaltende Vorläuferverbindungen der Myristinsäure der allgemeinen Formel I und/oder II eingesetzt werden, die alkylsubstituierten Di- oder Tricarboxysilanen mit z = 0 und x = 1 oder 2 entsprechen. Beispiele dafür sind Methyl-, Dimethyl, Ethyl- oder Methylethyl-substituierte Carboxysilane basierend auf Myristinsäure.

Als Carbonyl-R³ Gruppen werden die Säurereste der organischen Carbonsäuren verstanden, wie R³-(CO)-, die als Carboxylgruppe entsprechend den Formeln an das Silizium Si-OR¹, wie oben ausgeführt, gebunden sind. Generell können die Säurereste der Formel I und/oder II aus den natürlich vorkommenden oder synthetischen FettsäurenMyristinsäure (Tetradecansäure, R³ = C₁₃H₂₇) erhalten werden.

Bevorzugt wird jedoch rMyristinsäure als Fettsäure in der Formel I und/oder II mit einem hydrophoben KW-Rest verwendet, die ausreichend hydrophob ist, nach Freisetzung keinen unangenehmen Geruch aufweist und nicht aus den hergestellten Polymeren ausblüht. Dieses Ausblühen macht beispielsweise die Stearinsäure und Palmitinsäure nur beschränkt in höheren Konzentrationen einsatzfähig. Beispielsweise wird bereits bei einer Konzentration oberhalb von etwa 0,01 Gew.-% der freigesetzten Stearinsäure oder Palmitinsäure in Bezug auf die Gesamtzusammensetzung des Polymers ein wachsartiges Ausblühen auf den hergestellten Polymeren beobachtet. Säure in den Formeln I und/oder II ist daher Myristinsäure.

Die Silicium enthaltende Vorläuferverbindung der Myristinsäure ist insbesondere in hydrolysierter Form als Silanhydrolyse- und/oder -kondensationskatalysator aktiv sowie selbst in hydrolysierter oder nicht hydrolysierter Form zur Pfropfung auf einem Polymer und/oder Co-Polymerisierung mit einem Basispolymer, Polymer/Monomer oder Prepolymer geeignet. In hydrolysierter Form trägt die gebildete Silanol-Verbindung bei der Kondensation zur Vernetzung mittels gebildeter Si-O-Si-Siloxanbrücken bei. Diese Vernetzung kann mit anderen Silanolen, Siloxanen oder generell mit zur Vernetzung geeigneten funktionellen Gruppen an Substraten, Füllstoffen und/oder Trägermaterialien erfolgen. Bevorzugte Füllstoffe und/oder Trägermaterialien sind daher Aluminiumhydroxide, Magnesiumhydroxide, pyrogene Kieselsäure, gefällte Kieselsäure, Silikate sowie weitere der nachfolgend genannten Füllstoffe und Trägermaterialien.

Ganz besonders vorzugsweise enthält die Zusammensetzung als Komponente (i) in der Gruppe a) Vinylsilantrimyristat, sowie entsprechende Alkylsilan-Verbindungen der vorstehend genannten Säure, und/oder Silantetracarboxylate Si(OR¹)₄, wie Silantetramyristat. Zweckmäßig können auch in bestimmter Dosierung Vinylsilantristerarat, Vinylsilantripalmitat, Allylsilantristearat und/oder Allylsilantripalmitat sein. Silansterarate und/oder -palmitate sollten vorzugsweise so dosiert werden, dass nicht mehr als 1,0 Gew.-%, bevorzugt zwischen 0,001 Gew.-% und 0,8 Gew.-%, insbesondere 0,01 bis bis 0,6 Gew.-%, an freigesetzter Säure, wie Stearinsäure, Palmitinsäure, in der Gesamtzusammensetzung in Gew.-% des hergestellten Polymercompounds oder Polymers vorhanden sind. Ein entsprechender Grenzwert gilt auch bei Zugabe der freien Stearin- und/oder Palmitinsäure.

Besonders bevorzugt sind in jedem Fall jene Verbindungen der Gruppe a) und/oder b), in denen die organische Säure Myristinsäure ist, die über mindestens eine hydrophobe Gruppe verfügen, die eine Lösungsvermittlung oder Dispergierbarkeit mit dem Kunststoff ermöglicht.

Wie oben ausgeführt enthält die Zusammensetzung als Komponente der Gruppe a) mindestens eine i) Silicium enthaltende Vorläuferverbindung der Myristinsäure der allgemeinen Formel I und/oder II und/oder
ii) eine organofunktionelle Silan-Verbindung, die einem ungesättigten bzw. olefinischen Alkoxysilan entspricht, wobei die Silan-Verbindung ii) besonders bevorzugt einem einfach ungesättigten Alkoxysilan entspricht.

Die organofunktionelle Silan-Verbindung ist insbesondere zur Pfropfung auf einem Polymer und/oder Co-Polymerisation mit einem Monomer, Prepolymer oder Basispolymer und anschließender Feuchtigkeitsvernetzung im Sinne der vorliegenden Erfindung geeignet. Bevorzugt ist auch die Silicium enthaltende Vorläuferverbindung I und/oder II nur Pfropfung auf einem Polymer und/oder Co-Polymerisation mit einem Monomer, Prepolymer oder Basispolymer und anschließender Feuchtigkeitsvernetzung im Sinne der vorliegenden Erfindung geeignet.

Die Herstellung der Carboxysilane ist dem Fachmann lange bekannt. So offenbart die US 4,028,391 Verfahren zu ihrer Herstellung, in denen Chlorsilane mit Fettsäuren in Pentan umgesetzt werden. Die US 2,537,073 offenbart ein weiteres Verfahren. Beispielsweise kann die Säure direkt in einem unpolaren Lösemittel, wie Pentan, mit Trichlorsilan oder mit einem funktionalisierten Trichlorsilan unter Rückfluß erhitzt werden, um das Carboxysilan zu erhalten. Zur Herstellung von Tetracarboxysilanen wird beispielsweise Tetrachlorsilan mit der entsprechenden Säure in einem geeigneten Lösemittel umgesetzt (Zeitschrift für Chemie (1963), 3(12), 475-6). Weitere Verfahren betreffen die Umsetzung der Salze oder Anhydrate der Säuren mit Tetrachlorsilan oder funktionalisierten Trichlorsilanen.

Als organofunktionelle Silan-Verbindung ii) der Gruppe a) kann insbesondere eine Verbindung, die der allgemeinen Formel III entspricht, eingesetzt werden,

(B)_{b}SiR⁴ₐ(OR⁵)_{3-b-a} (III)

- wobei unabhängig voneinander b gleich 0, 1, 2 oder 3 und a gleich 0, 1, 2 oder 3 ist, mit der Maßgabe, dass in Formel III a+b kleiner gleich 3 ist,
- mit B unabhängig voneinander für eine einwertige Gruppe in Formel III (R⁷)₂C=C(R⁷)-E_{q}-, worin R⁷ gleich oder verschieden sind und R⁷ ein Wasserstoffatom oder eine Methylgruppe oder eine Phenylgruppe ist, die Gruppe E eine Gruppe aus der Reihe -CH₂-, -(CH₂)₂-, -(CH₂)₃-, -O(O)C(CH₂)₃- oder - C(O)O-(CH₂)₃- darstellt, q gleich 0 oder 1 ist, wie Vinyl-, Allyl-, n-3-Pentyl, n-4-Butenyl-, 3-Methaycryloxypropyl und/oder Acryloxypropyl, oder Isoprenyl, Hexenyl, Clyclohexenyl, Terpenyl, Squalanyl, Squalenyl, Polyterpenyl, Betulaprenoxy, cis/trans-Polyisoprenyl, oder B umfasst eine Olefin-Gruppe, beispielsweise R⁶-D_{P}-[C(R⁶)=C(R⁶)-C(R⁶)=C(R⁶)]ₜ-Dₚ-, worin R⁶ gleich oder verschieden sind und R⁶ ein Wasserstoffatom oder eine Alkylgruppe mit 1 bis 3 C-Atomen oder eine Arylgruppe oder eine Aralkylgruppe, vorzugsweise eine Methylgruppe oder eine Phenylgruppe, bedeutet, die Gruppen D gleich oder verschieden sind und D eine Gruppe aus der Reihe -CH₂-, -(CH₂)₂-, -(CH₂)₃-, - O(O)C(CH₂)₃- oder - C(O)O-(CH₂)₃- darstellt, p gleich 0 oder 1 und t gleich 1 oder 2 ist.
- R⁵ ist unabhängig voneinander Methyl, Ethyl, n-Propyl oder iso-Propyl,
- R⁴ ist unabhängig voneinander eine substituierte oder unsubstituierte Kohlenwasserstoff-Gruppe, insbesondere eine substituierte oder unsubstituierte lineare, verzweigte und/oder cyclische Alkyl-, Alkenyl-, Alkylaryl-, Alkenylaryl- und/oder Aryl-Gruppe mit 1 bis 24 C-Atomen, insbesondere mit 1 bis 16 C-Atomen, bevorzugt mit 1 bis 8 C-Atomen. Die substituierten Gruppen sind insbesondere hydrophob.

Als Alkyl-Gruppe eignet sich insbesondere Ethyl-, n-Propyl-, i-Propyl-, n-Butyl-, i-Butyl-, cyclo-Hexyl-, n-Octyl-, i-Octyl-, Hexadecyl- und als substituierte Alkyl-Gruppe eignen sich insbesondere eine Halogenalkyl-Gruppe mit Chlor-, Bromsubstituenten, bevorzugt zur nucleophilen Substitution geeignete Halogenalkyl-Gruppen, wie 3-Chlorpropyl- oder 3-Brompropyl- Gruppen.

Besonders bevorzugt umfasst B mindestens eine Olefin-Gruppe, wie Polyethylen, Polypropylen, Propylen-Co-Polymerisat oder Ethylen-Co-Polymerisat, insbesondere wenn die Zusammensetzung keine Komponenten der Gruppe b) enthält gegebenenfalls zusammen mit einem Radikalbildner und weiteren Stabilisatoren und/oder Zusätzen.

Ganz besonders vorzugsweise enthält die Zusammensetzung als Komponente (ii) Vinyltrimethoxysilan, Vinyltriethoxysilan, Vinylmethyldialkoxysilan, Vinyltriethoxymethoxysilan (VTMOEO), Vinyltri-i-propoxysilan, Vinyltri-n-butoxysilan, 3-Methacryloxypropyltriethoxysilan, 3-Methacryloxypropyltrimethoxysilan (MEMO) und/oder Vinylethoxydimethoxysilan und/oder Allylalkoxysilane, wie Allyltriethoxysilan, ungesättigte Siloxane, wie vorzugsweise oligomere Vinylsiloxane oder Mischungen der genannten Verbindungen. Bevorzugte organofunktionelle SilanVerbindungen enthalten entweder eine Vinyl- oder Methacryl-Gruppe, da diese Verbindungen gegenüber Radikalen reaktiv und zur Pfropfung auf eine Polymerkette oder zur Co-Polymerisation mit Monomeren, Prepolymeren geeignet sind.

Üblicherweise liegt die Zusammensetzung flüssig vor. Für eine leichtere Dosierbarkeit ist es jedoch bevorzugt die Zusammensetzung als feste, rieselfähige Formulierung bereitzustellen, beispielsweise auf einem Trägermaterial und/oder Füllstoff. Der Träger kann porös, partikelförmig, quellbar oder gegebenenfalls schaumförmig vorliegen. Als Trägermaterial eignet sich insbesondere Polyolefine, wie PE, PP, EVA oder Polymerblends und als Füllstoffe anorganische oder mineralische, die vorteilhaft verstärkend, streckend sowie flammhemmend sein können. Die Trägermaterialien und Füllstoffe sind nachstehend näher spezifiziert.

Entsprechend einer bevorzugten Ausführungsform besteht die Zusammensetzung aus einer Auswahl i) einer Vorläuferverbindung der Formel I und/oder II und/oder ii) einem einfach ungesättigten Alkoxysilan und/oder einer Myristinsäure und/oder einem Radikalbildner sowie gegebenenfalls mindestens einem Stabilisator und/oder Zusatzstoff und/oder Mischungen dieser.

Entsprechend einer weiteren bevorzugten Ausführungsform besteht die Zusammensetzung aus einer Auswahl i) einer Vorläuferverbindung der Formel I und/oder II, wobei R¹ einer Carbonyl-R³ Gruppe mit R³ gleich abgeleitet von Myristinsäure und/oder einem ii) olefinischen Alkoxysilan und/oder einem Radikalbildner sowie gegebenenfalls mindestens einem Stabilisator und/oder Zusatzstoff und/oder Mischungen dieser.

Entsprechend alternativen bevorzugten Ausführungsformen besteht die Zusammensetzung aus einer Auswahl i) einer Vorläuferverbindung der Formel I und/oder II, insbesondere wobei R¹ einer Carbonyl-R³ Gruppe mit R³ gleich abgeleitet von Myristinsäure entspricht, und/oder einem ii) olefinischen Alkoxysilan sowie gegebenenfalls mindestens einem Stabilisator und/oder Zusatzstoff und/oder Mischungen dieser.

Als mindestens eine organische Säure wird als Komponente in Gruppe b):
- iii.a) eine gesättigte und/oder ungesättigte Fettsäure (natürliche oder synthetische) ausgewählt aus der Gruppe der Myristinsäure
   und/oder als
- iii.b) eine Myristinsäure enthaltende siliciumfreie Vorläuferverbindung eingesetzt, beispielsweise ein organisches Anhydrid oder ein Ester, insbesondere der vorgenannten Säure oder auch natürliche oder synthetische Triglyceride und/oder Phosphoglyceride.

Generell sind die Säuren mit längeren hydrophoben Kohlenwasserstoffresten, nämlich die Myristinsäure, gut als Silanolkondensationskatalysator geeignet. Die weniger hydrophoben Säuren, wie Propionsäure, Essigsäure, Ameisensäure sind für die Umsetzung mit thermoplastischen hydrophoben Polymeren nur als zweckmäßig einzustufen. Entsprechend sind auch die geruchsintensiven Fettsäuren, wie Buttersäure und Caprylsäure aufgrund des stechenden Geruchs nur zweckmäßig oder wenig geeignet bis ungeeignet in einer Zusammensetzung, Master-Kit, Polymer-Kit oder einem erfindungsgemäßen Verfahren eingesetzt zu werden. Dies gilt insbesondere, wenn die hergestellten Polymere oder Polymercompounds zur Herstellung von Trinkwasserrohren weiterverwendet werden sollen.

Myristinsäure ist eine organische Säure, die keine Sulfat- oder Sulphonsäure-Gruppen aufweist, insbesondere ist es eine organische Säure entsprechend R³-COOH. Als Silicium freie Vorläuferverbindung können auch die Anhydride, Ester oder Salze dieser organischen Säure aufgefasst werden, besonders bevorzugt verfügen sie über einen langkettigen, unpolaren, insbesondere substituierten oder unsubstituierten Kohlenwasserstoffrest.

Somit werden Säuren mit langkettigen, hydrophoben Kohlenwasserstoffresten eingesetzt. Diese Säuren können auch als Dispergierhilfsmittel und/oder Verarbeitungshilfsmittel fungieren. Generell werden als Säuren die natürlich vorkommende oder synthetische Myristinsäure (Tetradecansäure, R³ = C₁₃H₂₇) als organische Säure als Silanolkondensationskatalysator eingesetzt, wobei die genannten kurzkettigen ungesättigten Fettsäuren nicht als Dispergierhilfsmittel und/oder Verarbeitungshilfsmittel geeignet sind und somit in bevorzugten Zusammensetzungen fehlen können.

Ferner können als eine Säure enthaltende siliciumfreie Vorläuferverbindung generell Ester und/oder Lactone, der vorgenannten Säure oder beispielsweise Triglyceride, wie sie in Fetten, Ölen vorkommen, insbesondere Neutralfette, oder auch Phosphoglyceride, wie Lecithin, Phosphatidylethynolamin, Phosphatidynositol, Phosphatidylserin und/oder Diphosphatidylglycerin, eingesetzt werden. Neben natürlich vorkommenden pflanzlichen und tierischen Triglyceriden können auch synthetische Triglyceride eingesetzt werden.

Eine allgemeine Anforderung an die Vorläuferverbindung (Si-frei und/oder Sienthaltend) ist, dass sie unter den Verfahrensbedingungen des Monosil- und/oder Sioplas-Prozesses hydrolysierbar ist und somit die freie Myristinsäure freisetzt. Die Hydrolyse sollte vorzugsweise erst im Vernetzungsschritt der Verfahren, insbesondere nach der Formgebung, beispielsweise mit dem Eintreten in das Wasserbad oder nach der Formgebung in Gegenwart von Feuchtigkeit eintreten. Zweckmäßig sind von den siliciumfreien Vorläuferverbindungen jene ausgenommen, die unter Hydrolyse in eine anorganische und eine organische Säure hydrolysiert werden. Als anorganische Säure wird vorliegend kein Silanol erfasst. Beispielsweise werden als siliciumfreie Vorläuferverbindungen keine Säurechloride oder generell keine entsprechenden Säurehalogenide der oben genannten organischen Säuren verstanden. Auch organische Säureperoxide sollen nicht als siliciumfreie Vorläuferverbindung aufgefasst werden.

Eine bevorzugte Zusammensetzung, die insbesondere zur Herstellung von Polymercompounds geeignet ist, enthält als Komponente c) mindestens einen Radikalbildner. Bevorzugte Radikalbildner sind organische Peroxide und/oder organische Perester oder Mischungen dieser, wie vorzugsweise tert.-Butylperoxy-pivalat, tert.-Butylperoxy-2-ethylhexanoat, Dicumylperoxid, Di-tert.-Butylperoxid, tert.-Butylcumylperoxid, 1,3-Di(2-tert.-butylperoxy-isoproyl)benzol, 2,5-Dimethyl-2,5-bis(tert.-butylperoxy)hexin(3), Di-tert.-amylperoxid, 1,3,5-Tris(2-tert.-butylperoxy-isopropyl)benzol, 1-Phenyl-1-tert.-butylperoxyphthalid, alpha,alpha'--Bis(tert.-butylperoxy)-diisopropyl-benzol, 2,5-Dimethyl-2,5-di-tert.-butylperoxy-hexan, 1,1-Di(tert.-butylperoxy)-3,3,5-trimethylcyclohexan (TMCH). Zweckmäßig kann auch die Verwendung von n-Butyl-4,4-di(tert.-butylperoxy)valerat, Ethyl-3,3-di(tert.-butylperoxy)butytat und/oder 3,3,6,9,9-Hexamethyl-1,2,4,5-tetraoxa-cyclononan sein.

Des Weiteren kann die Zusammensetzung noch als Komponente d) mindestens einen Stabilisator und/oder weiteren Zusatzstoff und/oder Mischungen dieser enthalten. Als Stabilisator und/oder als weitere Zusatzstoffe können gegebenenfalls Metalldesaktivatoren, Verarbeitungshilfsmittel, anorganische oder organische Pigmente, Füllstoff, Trägermaterial, Haftvermittler eingesetzt werden. Dies sind beispielsweise Titandioxid (TiO₂), Talkum, Ton, Quarz, Kaolin, Aluminiumhydroxid, Magnesiumhydroxid, Bentonit, Montmorillonit, Glimmer (Muskovitglimmer), Calciumcarbonat (Kreide, Dolomit), Farben, Pigmente, Talkum, Ruß, SiO₂, Fällungskieselsäure, pyrogene Kieselsäure, Aluminiumoxide, wie alpha- und/oder gamma-Aluminiumoxid, Aluminiumoxidhydroxide, Böhmit, Barit, Bariumsulfat, Kalk, Silikate, Aluminate, Aluminiumsilikate und/oder ZnO oder Mischungen dieser. Vorzugweise liegen die Trägermaterialien oder Zusatzstoffe, wie Pigmente, Füllstoffe, pulverförmig, partikulär, porös, quellbar oder gegebenenfalls schaumförmig vor.

Bevorzugte Metalldesaktivatoren sind beispielsweise N,N'-Bis(3-(3,5-di-tert.butyl-4-hydroxyphenyl)-propionyl)hydrazin sowie Tris-(2-tert. butyl-4-thio(-2 '-methyl-4-hydroxy-5'-tert.butyl)phenyl-5-methyl)phenylphosphit.

Ferner kann die Zusammensetzung als weitere Komponente mindestens einen thermischen Stabilisator enthalten, beispielsweise Pentaerythrityl-tetrakis [3-(3,5-bis(1,1-dimethylethyl)-4-hydroxyphenyl)propionate], Octadecyl-3-(3,5-di-tert.butyl-4-hydroxyphenyl)propionat sowie 4,4'-Bis-(1, 1-dimethylbenzyl)-diphenylamin.

Die Füllstoffe sind im Allgemeinen anorganisch oder mineralisch und können in vorteilhafter Weise verstärkend, streckend sowie flammhemmend sein. Sie tragen zumindest auf ihren Oberflächen Gruppen, die mit den Alkoxy-Gruppen der ungesättigten Organosilan/-mischungen reagieren können. Im Ergebnis kann dadurch das Siliciumatom mit der daran gebundenen funktionellen Gruppe auf der Oberfläche chemisch fixiert werden. Solche Gruppen auf der Oberfläche des Füllstoffs sind insbesondere Hydroxylgruppen.

Bevorzugte Füllstoffe sind dementsprechend Metallhydroxide mit stöchiometrischem Anteil oder, in ihren unterschiedlichen Entwässerungsstufen, mit substöchiometrischem Anteil an Hydroxylgruppen bis hin zu Oxiden mit vergleichsweise wenigen restlichen, aber durch DRIFT-IR-Spektroskopie nachweisbaren Hydroxylgruppen.

Beispiele für geeignete Füllstoffe sind Aluminiumtrihydroxid (ATH), Aluminiumoxidhydroxid (AIOOH.aq), Magnesiumdihydroxid (MDH), Brucit, Huntit, Hydromagnesit, Glimmer und Montmorillonit. Ferner können als Füllstoff Kalziumcarbonat, Talkum sowie Glasfasern eingesetzt werden. Des Weiteren können so genannte "char former", wie Ammoniumpolyphosphat, Stannate, Borate, Talk, oder solche in Kombination mit anderen Füllstoffen eingesetzt werden.

Als weitere Komponente e) kann die Zusammensetzung ein thermoplastisches Basispolymer, ein silangepfropftes Basispolymer, ein silan-co-polymerisiertes Basispolymer und/oder Monomer und/oder Prepolymer dieser Basispolymere, oder auch Silan-Block-Co-Preplomere oder Block-co-Prepolymere und/oder Mischungen dieser umfassen. Vorzugsweise ist das thermoplastische Basispolymer ein unpolares Polyolefin, wie Polyethylen, Polypropylen oder ein Polyvinylchlorid oder ein silangepfropftes Polyolefin und/oder silan-co-polymerisiertes Polyolefin und/oder ein Co-Polymer aus einem oder mehreren Olefinen und einem oder mehreren Co-Monomeren, die polare Gruppen enthalten.

Das thermoplastische Basispolymer kann auch teilweise oder vollständig als Trägermaterial fungieren, beispielsweise in dem Masterbatch umfassend als Trägermaterial ein thermoplastisches Basispolymer oder ein Polymer und die Silicium enthaltende Vorläuferverbindung der Myristinsäure und eine organofunktionelle Silanverbindung oder gemäß einer Alternative ein thermoplastisches Basispolymer oder ein Polymer und eine organofunktionelle Silanverbindung, insbesondere der Formel III und Myristinsäure.

Beispiele für silan-co-polymerisierte thermoplastische Basispolymere sind auch Ethylen-Silan Co-Polymere, beispielsweise Ethylen-Vinyltrimethoxysilan Co-Polymer, Ethylen-Vinyltriethoxysilan Co-Polymer, Ethylen-dimethoxyethoxysilan Co-Polymer, Ethylen-gamma-trimethoxysilan Co-Polymer, Ethylen-gamma-(meth)acryloxypropyltriethoxysilan Co-Polymer, Ethylen-gamma-acryloxypropyltriethoxysilan Co-Polymer, Ethylen-gamma-(meth)acryloxypropyltrimethoxysilan Co-Polymer, Ethylen-gammaacryloxypropyltrimethoxysilan Co-Polymer und/oder Ethylen-triacetoxysilan Co-Polymer.

Als unpolare thermoplastische Basispolymere können Thermoplaste, wie insbesondere ein reiner PE-Typ, verwendet werden, beispielsweise PE-LD, PE-LLD, PE-HD, m-PE. Polare Gruppen tragende Basispolymere ergeben z. B. ein verbessertes Brandverhalten, d. h. geringere Entflammbarkeit und Rauchgasdichte, und erhöhen das Füllstoffaufnahmevermögen. Polare Gruppen sind z. B. Hydroxyl-, Nitril-, Carbonyl-, Carboxyl-, Acyl-, Acyloxy-, Carboalkoxygruppen oder Aminogruppen sowie Halogenatome, insbesondere Chloratome. Nicht polar sind olefinische Doppelbindungen oder C-C-Dreifachbindungen. Geeignete Polymere sind neben Polyvinylchlorid Co-Polymere aus einem oder mehreren Olefinen und einem oder mehreren Co-Monomeren, die polare Gruppen enthalten, z. B. Vinylacetat, Vinylpropionat, (Meth)acrylsäure, (Meth)acrylsäuremethylester, (Meth)acrylsäure-ethylester, (Meth)acrylsäurebutylester, Acrylnitril. In den Copolymeren finden sich die polaren Gruppen, beispielsweise in Mengen von 0,1 bis 50 Mol-%, vorzugsweise von 5 bis 30 Mol-%, bezogen auf die Polyolefinbausteine. Besonders geeignete Basispolymere sind Ethylen-Vinylacetat-Copolymere (EVA). Beispielsweise enthält ein geeignetes handelsübliches Copolymer 19 Mol-% Vinylacetat- und 81 Mol-% Ethylenbausteine.

Besonders geeignete Basispolymere sind Polyethylen, Polypropylen, sowie entsprechend silanmodifizierte Polymere. So sind durch den Einsatz erfindungsgemäßer Masterbatches (Master-Kit oder Polymer-Kit), insbesondere silan-gepfropftes, silan-co-polymerisiertes und/oder silanvernetztes PE, PP, Polyolefincopolymer, EVA, EPDM, EPM in vorteilhafter Weise erhältlich. Die silan-gepfropften Polymere können mit Füllstoffen gefüllt oder ungefüllt vorliegen und gegebenenfalls nach einer Formgebung, anschließend feuchtigkeitsvernetzt werden. Entsprechend verhält es sich mit den silan-co-polymerisierten, mit Füllstoffen gefüllten oder ungefüllten Polymeren, die gegebenenfalls nach einer Formgebung, anschließend feuchtigkeitsvernetzt werden können.

Die Zusammensetzung eignet sich als Zusatz in einem Monosil-, Sioplas- und/oder in einem Co-Polymerisationsprozess bzw. -verfahren. Besonders geeignet wird der Silanhydrolyse- und/oder Silanolkondensationskatalysator erst wirksam, wenn zusätzlich Feuchte zugesetzt wird. Daher findet die endgültige Vernetzung des ungefüllten oder gefüllten Polymers im Allgemeinen nach bekannter Art im Wasserbad, im Dampfbad, oder aber durch Luftfeuchtigkeit bei Umgebungstemperaturen (so genanntes "ambient curing") statt.

Die Komponenten der Zusammensetzung, wie insbesondere die Silicium enthaltende Vorläuferverbindung der Myristinsäure liegen zweckmäßig flüssig, vorzugsweise wachsartig, fest oder auf einem Trägermaterial gebunden vor, und/oder die organofunktionelle Silan-Verbindung kann flüssig, hochviskos, wachsartig, fest oder auf einem Trägermaterial gebunden vorliegen. Insbesondere ist die Silicium enthaltende Vorläuferverbindung der Laurinsäure und/oder der Myristinsäure im Wesentlichen wachsartig oder fest, d.h. sie liegt im Wesentlichen in fester Phase vor, die amorphe oder kristalline Bereiche aufweisen kann. Durch diese Maßnahme kann die Vorläuferverbindung leicht wasserfrei aufbewahrt werden und leicht dosiert werden. Eine ungewünschte Hydrolyse und/oder Kondensation vor der Verwendung, insbesondere in einem Monosil-, Sioplas-Verfahren oder Co-Kondensationsverfahren kann unterbunden werden.

Um die Dosierbarkeit und gegebenenfalls Hydrolyseempfindlichkeit besser regulieren zu können kann die Silicium enthaltende Vorläuferverbindung der Myristinsäure der allgemeinen Formel I und/oder II, die organofunktionelle Silan-Verbindung und gegebenenfalls der Radikalbildner auf einem Trägermaterial aufgebracht sein, wie es beispielsweise in EP 0 426 073 beschrieben ist.

Sofern die Silicium enthaltende Vorläuferverbindung I und/oder II selbst fest ist, kann sie selbst als Trägermaterial eingesetzt werden, insbesondere für ein organofunktionelles Silan, beispielsweise zur Trägerung eines Silans der allgemeinen Formel III, beispielsweise von Vinyltriethoxysilan, Vinyltrimethoxysilan, Vinyltris-(methoxyethoxy)silan (VTMOEO), Vinyl-(co)Oligomere oder anderer flüssiger Silane der Formel III.

Als Trägermaterial eignet sich bevorzugt ein poröses Polymer, ausgewählt aus der Reihe Polypropylen, Polyolefine, Ethylen-Copolymer mit an Kohlenstoff armen Alkenen, Ethylen-Vinylacetat-Copolymer, Polyethylen mit hoher Dichte, Polyethylen mit geringer Dichte oder lineares Polyethylen mit geringer Dichte. Wobei das poröse Polymer ein Porenvolumen von 30 bis 90 % aufweisen kann und insbesondere granuliert oder in Pellet-Form eingesetzt werden kann.

Alternativ kann das Trägermaterial auch ein Füllstoff oder Zusatzstoff sein, insbesondere ein nanoskaliger Füllstoff. Bevorzugte Trägermaterialien, Füllstoffe oder Zusatzstoffe sind Aluminiumhydroxid, Magnesiumhydroxid, pyrogene Kieselsäure, gefällte Kieselsäure, Wollastonit, kalzinierte Varianten, chemisch und/oder physikalisch modifizierte, beispielsweise Kaolin, modifiziertes Kaolin, insbesondere gemahlen, exfolierende Werkstoffe, wie Schichtsilikate, vorzugsweise spezielle Kaoline, ein Calciumsilikat, ein Wachs, wie beispielsweise ein Polyolefinwachs auf Basis LDPE ("Low density Polyethylen"), oder ein Russ.

Das Trägermaterial kann die Silicium enthaltende Vorläuferverbindung und/oder die Silan-Verbindung der Gruppe a) und/oder den Radikalbildner einkapseln oder physikalisch oder chemisch gebunden halten. Dabei ist es günstig, wenn das beladene oder unbeladene Trägermaterial quellbar ist, beispielsweise in eine Lösemittel. Üblicherweise liegt die Menge der Silankomponenten der Gruppe a) im Bereich von 0,01 Gew.-% bis 99,9 Gew.-%, insbesondere zwischen 0,1 Gew.-% bis 70 Gew.-%, bevorzugt zwischen 0,1 Gew.-% bis 50 Gew.-%, besonders bevorzugt zwischen 0,1 Gew.-% bis 30 Gew.-%, bezogen auf das Gesamtgewicht der Zusammensetzung umfassend das Trägermaterial, besonders bevorzugt als Masterbatch. Das Trägermaterial liegt daher in der Regel zu 99,99 bis 0,01 Gew.-%, bezogen auf das Gesamtgewicht der Zusammensetzung (ad 100 Gew.-%), vor.

Um die Dosierung der Zusammensetzung zu erleichtern und, um sie besser gegenüber vorzeitiger Hydrolyse zu schützen ist es besonders bevorzugt, wenn die Silicium enthaltende Vorläuferverbindung der Myristinsäure, die organofunktionelle Silan-Verbindung oder eine Mischung der beiden Verbindungen wachsartig, fest oder auf einem Trägermaterial gebunden vorliegt.

Im Einzelnen seien als bevorzugte Trägermaterialien erwähnt: ATH (Aluminiumtrihydroxid, Al(OH)₃), Magnesiumhydroxid (Mg(OH)₂) oder pyrogene Kieselsäure, die im großtechnischen Maßstab durch kontinuierliche Hydrolyse von Siliciumtetrachlorid in einer Knallgasflamme hergestellt wird. Dabei wird das Siliciumtetrachlorid verdampft und reagiert anschließend innerhalb der Flamme mit dem aus der Knallgasreaktion stammenden Wasser spontan und quantitativ. Die pyrogene Kieselsäure ist eine amorphe Modifikation des Siliciumdioxids in Form eines lockeren, bläulichen Pulvers. Die Teilchengröße liegt üblicherweise im Bereich von wenigen Nanometern, die spezifische Oberfläche ist daher groß und beträgt im Allgemeinen 50 bis 600 m²/g. Die Aufnahme der Vinylalkoxysilane und/oder der Silicium enthaltenden Vorläuferverbindung oder Mischungen dieser beruht dabei im Wesentlichen auf Adsorption. Fällungskieselsäuren werden im Allgemeinen aus Natronwasserglas-Lösungen durch Neutralisation mit anorganischen Säuren unter kontrollierten Bedingungen hergestellt. Nach Abtrennung von der flüssigen Phase, Auswaschen und Trocknen wird das Rohprodukt feingemahlen, z. B. in Dampfstrahlmühlen. Auch Fällungskieselsäure ist ein weitgehendes amorphes Siliciumdioxid, das in der Regel eine spezifische Oberfläche von 50 bis 150 m²/g besitzt. Fällungskieselsäure weist im Gegensatz zur pyrogenen Kieselsäure eine gewisse Porosität auf, beispielsweise rd. 10 Vol.-%. Die Aufnahme der Vinylalkoxysilane und/oder der Silicium enthaltenden Vorläuferverbindung oder Mischungen dieser kann daher sowohl durch Adsorption an der Oberfläche als auch durch Absorption in den Poren erfolgen. Calciumsilikat wird technisch im Allgemeinen durch Zusammenschmelzen von Quarz oder Kieselgur mit Calciumcarbonat bzw. -oxid oder durch Fällung von wässrigen Natriummetasilikat-Lösungen mit wasserlöslichen Calciumverbindungen hergestellt. Das sorgfältig getrocknete Produkt ist in der Regel porös und kann Wasser oder Öle bis zur fünffachen Gewichtsmenge aufnehmen.

Poröse Polyolefine, wie Polyethylen (PE) oder Polypropylen (PP) sowie Copolymere, wie Ethylen-Copolymere mit an Kohlenstoff armen Alkenen, beispielsweise Propen, Buten, Hexen, Octen, oder Ethylenvinylacetat (EVA), werden durch spezielle Polymerisationstechniken und -verfahren hergestellt. Die Teilchengrößen liegen im Allgemeinen zwischen 3 und < 1 mm, und die Porosität kann über 50 Vol.-% betragen, sodass die Produkte geeigneterweise große Mengen an ungesättigten Organosilan/-mischungen, beispielsweise der allgemeinen Formel III, und/oder der Silicium enthaltenden Vorläuferverbindung oder Mischungen dieser, zu absorbieren vermögen, ohne ihre Freifliess-Eigenschaften zu verlieren.

Als Wachse eignen sich insbesondere Polyolefinwachse auf Basis von "low density Polyethylen" (LDPE), vorzugsweise verzweigt, mit langen Seitenketten. Der Schmelz- und Erstarrungspunkt liegt in der Regel zwischen 90 und 120 °C. Die Wachse lassen sich in der Regel in einer niedrigviskosen Schmelze gut mit den ungesättigten Organosilanen, wie Vinylalkoxysilan, und/oder der Silicium enthaltenden Vorläuferverbindung oder Mischungen dieser vermengen. Die erstarrte Mischung ist im Allgemeinen hinreichend hart, sodass sie granuliert werden kann.

Ruß in seinen verschiedenen Handelsformen eignet sich z. B. zur Herstellung von schwarzen Kabelummantelungen.

Zur Herstellung der geträgerten Zusammensetzungen (dry-liquids) beispielsweise aus olefinischen Silancarboxylaten, wie Vinylsilancarboxylat der Myristinsäure oder Laurinsäure, und Trägermaterial, oder eines Tetracarboxysilans und Vinylalkoxysilans mit Trägermaterial, stehen unter anderem folgende Methoden zur Verfügung:
Zu den bekanntesten Methoden gehört die Sprühtrocknung. Nachfolgend werden alternative Methoden näher erläutert: Mineralische Träger oder poröse Polymere werden in der Regel vorgewärmt, z. B. in einem Wärmeschrank auf 60 °C, und in einen zylindrischen Behälter gegeben, der mit trockenem Stickstoff gespült und gefüllt wurde. Im Allgemeinen werden anschließend ein Vinylalkoxysilan und/oder Vinylcarboxysilan zugegeben und der Behälter in eine Rollvorrichtung gelegt, durch die er ca. 30 Minuten lang in Rotation versetzt wird. Nach dieser Zeit hat sich üblicherweise aus dem Trägerstoff und den flüssigen, hochviskos oder wachsartigen Alkoxysilan und/oder Carboxysilan ein rieselfähiges, oberflächlich trockenes Granulat gebildet, das zweckmäßig unter Stickstoff in lichtundurchlässigen Behältern gelagert wird. Alternativ kann man den erwärmten Trägerstoff in einen mit trockenem Stickstoff gespülten und gefüllten Mischer, z. B. einen Pflugscharmischer vom Typ LÖDIGE oder einen Propellermischer vom Typ HENSCHEL, geben. Das Mischwerk kann nun in Betrieb genommen und das olefinische Alkoxysilan und/oder Carboxysilan, insbesondere der Formel I, oder Mischungen dieser nach Erreichen der maximalen Mischleistung über eine Düse eingesprüht werden. Nach beendeter Zugabe wird im Allgemeinen noch ca. 30 Minuten homogenisiert und danach das Produkt, z. B. mittels einer mit trockenem Stickstoff betriebenen pneumatischen Förderung, in lichtundurchlässige, mit Stickstoff gefüllte Behälter abgefüllt.

Wachs/Polyethylenwachs in pelletierter Form mit einem Schmelzpunkt von 90 bis 120 °C oder höher kann in einem beheizbaren Gefäß mit Rührer, Rückflusskühler und Flüssigkeitszugabevorrichtung portionsweise aufgeschmolzen und im schmelzflüssigen Zustand gehalten werden. Während des gesamten Herstellprozesses wird geeigneterweise trockener Stickstoff durch die Apparatur geleitet. Über die Flüssigkeitszugabevorrichtung können nach und nach beispielsweise die flüssigen Vinylcarboxysilan/-mischungen in die Schmelze gegeben und durch intensives Rühren mit dem Wachs vermischt werden. In der Regel wird danach die Schmelze zum Erstarren in Formen abgelassen, und das erstarrte Produkt wird granuliert. Alternativ kann die Schmelze auf ein gekühltes Formband auftropfen gelassen werden, auf dem sie in gebrauchsfreundlicher Pastillenform erstarrt.

Geeignete Zusatzstoffe zum Einsatz in den erfindungsgemäßen Master-Kits sind vorstehend beschrieben.

Als Trägermaterial kommen insbesondere die vorstehend genannten, wie PE, PP sowie weitere der oben genannten in Frage. Entsprechendes gilt für den Radikalbildner und den Stabilisator. Die Komponenten A und B liegen vorzugsweise in dem Master-Kit getrennt voneinander vor, wenn sie in zwei Verfahrensschritten eingesetzt werden sollen. Bei gleichzeitiger Verwendung können die beiden Komponenten A und B mit einander in einer physikalischen Mischung, beispielsweise als Pulver, Granulat, Pellets, oder auch gemeinsam formuliert in einer einzigen Formulierung, beispielsweise als Pellet oder Tablette vorliegen. Ein erfindungsgemäßes Masterbatch umfasst ein Vinyltriethoxysilan, beispielsweise Vinyltrimethoxysilan, ein Peroxid sowie ein Verarbeitungshilfsmittel, sowie eine Silicium enthaltende Vorläuferverbindung der Myristinsäure gegebenenfalls mit einem Trägermaterial.

Ein bevorzugtes Master-Kit weist beispielsweise 2 Gew.-% einer Myristinsäure auf einem polymeren Trägermaterial, wie PE-HD, auf, wobei PE-HD ad 100 Gew.-% mit 98 Gew.-% des Master-Kit (Komponente-A) vorliegt. Weitere Master-Kits umfassen als organische Säure Myristinsäure, gegebenenfalls in Mischung auf einem Trägermaterial, beispielsweise PE-HD.

Als Komponente B kann vorzugsweise ein ungesättigtes Alkoxysilan, insbesondere der Formel III, oder daraus hergestellte oligomere Siloxane, bevorzugt Vinyltrimethoxysilan oder Vinyltriethoxysilan zusammen mit einem Radikalbildner und einem Stabilisator, gegebenenfalls mit weiteren Additiven vorliegen. Vorzugsweise auf einem Trägermaterial, beispielsweise als Granulat.

Gegenstand der Erfindung ist auch ein Verfahren zur Herstellung von Polymercompounds, wie Granulaten, Fertigprodukten, Formkörpern, insbesondere von ungefüllten oder gefüllten Polymeren, indem
1) ein Gemisch aus thermoplastischem Basispolymer, insbesondere mit einer Komponente der Gruppe a) mindestens einer Silicium enthaltenden Vorläuferverbindung der Myristinsäure und/oder einer organofunktionellen Silan-Verbindung und mit einer Komponente der Gruppe b) der Myristinsäure oder einer Myristinsäure enthaltenden siliciumfreien Vorläuferverbindung sowie einem Radikalbildner in einer Compoundierapparatur umgesetzt werden, insbesondere in Gegenwart von Feuchtigkeit, oder
2) thermoplastisches Basispolymer in einem ersten Schritt mit a) einer organofunktionellen Silan-Verbindung sowie einem Radikalbildner, insbesondere zur Herstellung von silan-gepfropftem Polymer, umgesetzt werden und in einem nachfolgenden, insbesondere anschließendem, Schritt unter Zusatz mindestens einer Silicium enthaltenden Vorläuferverbindung der Myristinsäure, der Myristinsäure und/oder einer Myristinsäure enthaltenden siliciumfreien Vorläuferverbindung in Form gebracht wird und unter Einwirkung von Feuchtigkeit vernetzt oder
3) thermoplastisches Basispolymer in einem ersten Schritt mit a) mindestens einer olefinischen Silicium enthaltenden Vorläuferverbindung der Myristinsäure, insbesondere der allgemeinen Formeln I und/oder II mit z = 1, 2 oder 3, sowie einem Radikalbildner umgesetzt werden und in einem nachfolgenden Schritt unter Zusatz mindestens einer Silicium enthaltenden Vorläuferverbindung der Myristinsäure, einer Myristinsäure enthaltenden siliciumfreien Vorläuferverbindung und/oder einer Myristinsäure in Form gebracht wird und unter Einwirkung von Feuchtigkeit vernetzt oder
4) Monomer und/oder Prepolymer der thermoplastischen Basispolymere mit a) einer organofunktionellen Silan-Verbindung sowie einem Radikalbildner umgesetzt werden, insbesondere zur Herstellung von silan-co-polymerisiertem Basispolymer, und in einem nachfolgenden, insbesondere unmittelbar oder lediglich nachfolgenden, Schritt unter Zusatz mindestens einer Silicium enthaltenden Vorläuferverbindung der Myristinsäure, einer Myristinsäure und/oder einer eine Myristinsäure enthaltenden siliciumfreien Vorläuferverbindung in Form gebracht wird und anschließend unter Einwirkung von Feuchtigkeit vernetzt.

Nach einem alternativen erfindungsgemäßen Verfahren zur Herstellung von Polymercompounds, wie Granulaten, Fertigprodukten, Formkörpern, insbesondere von ungefüllten oder gefüllten Polymeren, wird
1) ein Gemisch aus thermoplastischem Basispolymer mit der Komponente B des Master-Kits und der Komponente A des vorstehend beschriebenen Master-Kits in einer Compoundierapparatur umgesetzt, gegebenenfalls zu einem gegebenen Zeitpunkt in Form gebracht und feuchtigkeitsvernetzt, oder
2) thermoplastisches Basispolymer in einem ersten Schritt mit der Komponente B des vorstehend beschriebenen Master-Kits umgesetzt und in einem nachfolgenden Schritt unter Zusatz der Komponente A eines vorstehend beschriebenen Master-Kits in Form gebracht und unter Einwirkung von Feuchtigkeit vernetzt oder
3) Monomer und/oder Prepolymer der thermoplastischen Basispolymere mit der Komponente B des Master-Kits, wie eingangs beschrieben, umgesetzt und in einem nachfolgenden Schritt unter Zusatz der Komponente A des Master-Kits in Form gebracht und anschließend unter Einwirkung von Feuchtigkeit vernetzt, insbesondere wird ein thermoplastisches Basispolymer mit der Komponente B des Master-Kits gemischt und zur Reaktion gebracht, anschließend granuliert und gegebenenfalls abfüllt bzw. verpackt, beispielsweise als PEg (PE Granulat) in einem mit Aluminium beschichteten Beutel. In einem nachfolgenden Schritt wird die Komponente A dem Granulat (PEg) zugesetzt, gemischt, gegebenenfalls in Form gebracht und während dessen oder nachfolgend in Gegenwart von Feuchtigkeit vernetzt; oder
4) thermoplastisches Basispolymer mit einem vorstehend beschriebenen Master-Kit in einem Monosil-Prozess umgesetzt, insbesondere eine der vorgenannten bevorzugten Zusammensetzungen, oder
5) thermoplastisches Basispolymer mit einem vorstehend beschriebenen Master-Kit in einem Sioplas-Prozess umgesetzt oder
6) Monomer und/oder Prepolymer der thermoplastischen Basispolymere mit einem vorstehend beschriebenen Master-Kit in einem Co-Polymerisationsverfahren umgesetzt.

Gegenstand der Erfindung ist auch die Umsetzung eines Polymer-Kits in einem Monosil- oder Sioplas-Verfahren oder einem Co-Polymerisationsverfahren.

Entsprechend einer Ausführungsform der Erfindung wird das Master-Kit oder das Polymer-Kit bei der Herstellung silangepfropfter, silan-co-polymerisierter und/oder vernetzter, insbesondere siloxanvernetzter, gefüllter oder ungefüllter Polymere verwendet.

Gegenstand der Erfindung ist somit auch die Verwendung des Master-Kits oder des Polymer-Kits, insbesondere in einem Monosil, Sioplas oder Co-PolymerisationsVerfahren, zur Herstellung von gefüllten und/oder ungefüllten Polymercompounds, die vernetzt oder unvernetzt vorliegen können, und/oder vernetzten gefüllten und/oder ungefüllten Polymeren basierend auf thermoplastischen Basispolymeren. Vernetzung im Sinne der Erfindung bedeutet insbesondere die Bildung einer Si-O-Substrat Bindung oder Si-O-Füllstoff, Si-O-Trägermaterial oder Si-O-Si-Verbrückung, d.h. die Kondensation einer Si-OH-Gruppe mit einer kondensationsfähigen weiteren Gruppe eines Substates.

Bevorzugt ist die Verwendung zur Herstellung von silangepfropfter, silan-co-polymerisierter und/oder vernetzter, insbesondere siloxanvernetzter, gefüllter oder ungefüllter Polymere. Die vorgenannten Polymere können auch Block-Co-Polymere umfassen. Bevorzugt werden die Füllstoffe ebenfalls mit den Silicium enthaltenden Verbindungen vernetzt, insbesondere über eine Si-O-Füllstoff/Trägermaterial-Bindung. Als Füllstoffe kommen insbesondere die vorgenannten Füllstoffe oder Trägermaterialien in Betracht. In einigen der vorgenannten Verfahren werden bevorzugt die ungesättigten Fettsäuren eingesetzt. Daher werden teilweise keine üblichen organischen Säuren, wie Essigsäure, Ameisensäure, Maleinsäure, Maleinsäureanhydrid oder Stearinsäure eingesetzt

Das Verfahren nach Anspruch 4 Absatz 1) wird bevorzugt mit mindestens einem einfach ungesättigten Alkoxysilan entsprechend der Formel III durchgeführt oder einer Silicium enthaltenden Vorläuferverbindung der Myristinsäure, insbesondere der Formeln I und/oder III oder mit einer Mischung der genannten Verbindungen.

Als Silicium enthaltende Vorläuferverbindungen der allgemeinen Formeln I und/oder II Verbindungen mit R¹ einer Carbonyl-R³-Gruppe ausgewählt aus der Gruppe der Myristinsäure werden insbesondere solche eingesetzt, bei denen z gleich 0 oder 1 bedeutet. In Zusammensetzungen kann es bevorzugt sein ein einfach ungesättigtes Alkoxysilan zusammen mit einer Verbindung der Formel I und/oder II einzusetzen, mit z gleich 0, 1, 2 oder 3.

Als organische Säure wird bei den thermoplastischen Basispolymeren, oder den silan-gepfropften und/oder silan-co-polymerisierten Basispolymeren, insbesondere nicht bei Polyvinylchloriden, Myristinsäure eingesetzt. Alleine oder in Zusammensetzungen kann es bevorzugt sein, insbesondere in einem Einschrittverfahren, ein einfach oder mehrfach ungesättigtes Alkoxysilan mit a gleich 0 und ohne weiteres Alkylsilan einzusetzen.

Im Allgemeinen werden die erfindungsgemäß feuchtigkeitsvernetzten ungefüllten oder gefüllten Polymercompounds durch Mischen der jeweiligen Eduktkomponenten, entsprechend obigen Ausführungen der Verfahren in der Schmelze hergestellt, zweckmäßig unter Feuchtigkeitsausschluss. Dafür eignen sich in der Regel die üblichen heizbaren Homogenisierapparate, z. B. Kneter oder, vorteilhaft bei kontinuierlichem Betrieb, Buss-Co-Kneter oder Doppelschneckenextruder. Alternativ dazu kann auch ein Einwellenextruder verwendet werden. Die Komponenten können dabei, jeweils für sich oder in Teilmischungen, in dem vorgegebenen Mengenverhältnis laufend dem auf eine Temperatur oberhalb des Schmelzpunkts des thermoplastischen Basispolymers erhitzten Extruder zugeführt werden. Zweckmäßig wird die Temperatur zum Schneckenende hin ansteigen, um eine niedrigere Viskosität einzustellen und dadurch eine innige Durchmischung zu ermöglichen. Die Extrudate werden zweckmäßigerweise noch flüssig einer Vorrichtung zur Formung von Granulaten oder Formkörpern, wie Rohren, zugeführt. Die endgültige Vernetzung des ungefüllten oder gefüllten Polymers findet im Allgemeinen nach bekannter Art im Wasserbad, im Dampfbad, oder aber durch Luftfeuchtigkeit bei Umgebungstemperaturen (so genanntes "ambient curing") statt.

In dem erfindungsgemäßen Verfahren kann mindestens ein Stabilisator und/oder mindestens ein weiterer Zusatzstoff, entsprechend den obigen Ausführungen, vor und/oder während des Verfahrens und/oder eines Verfahrensschrittes zugesetzt werden.

Gegenstand der Erfindung ist auch ein Polymer, beispielsweise ein vernetztes, gefülltes oder vernetztes ungefülltes Polymer; ein Polymercompound, wie ein Kabelcompound, Flammschutzkabel, beispielsweise gefüllt mit Mg(OH)₂, Al(OH)₃oder exfolierenden Werkstoffen, wie Schichtsilikaten; ein gefüllter Kunststoff, ein ungefüllter Kunststoff, Formkörper und/oder Artikel erhältlich nach dem erfindungsgemäßen Verfahren nach einem der Ansprüche 5 bis 7. Entsprechende Formkörper und/oder Artikel sind Kabel, Rohre, wie Trinkwasserleitungen, oder Artikel, die im Lebensmittelbereich oder im Bereich von Hygieneartikeln, im Bereich der Medizintechnik, beispielsweise als medizinisches Instrument oder Teil eines medizinischen Instrumentes, Braunüle, Trokar, Stent, Clot-Retriever, Gefäßprothese, als Bauteil an einem Katheter, um nur einige zu nennen, eingesetzt werden können.

Ein weiterer Gegenstand der Erfindung betrifft ein Polymer-Kit umfassend die vorstehend beschriebene Zusammensetzung, insbesondere die Komponenten der Gruppe a), b), c) und/oder d) sowie, insbesondere davon getrennt, als weitere Komponenten die Komponente e) ein thermoplastisches Basispolymer, beispielsweise ein silangepfropftes Basispolymer, silan-co-polymerisiertes Basispolymer oder ein Monomer oder Prepolymer des Basispolymers und/oder Mischungen dieser. Die Komponenten der Gruppe a), b), c) und/oder d) können jeweils getrennt oder als Mischung auf Füllstoffen oder mineralischen Trägermaterialien, beispielsweise den vorgenannten Trägermaterialien, oder auch auf Kohlenstoff, wie Aktivkohle oder Carbonblack, geträgert in dem Polymer-Kit vorliegen.

Ein alternatives Polymer-Kit umfassend das vorstehend beschriebene Master-Kit sowie als weitere Komponenten ein thermoplastisches Basispolymer, beispielsweise ein silangepfropftes Basispolymer, silan-co-polymerisiertes Basispolymer, oder ein Monomer oder Prepolymer des Basispolymers und/oder Mischungen dieser.

Ein Beispiel für ein Polymer-Kit ist: 63,5 Gew.-% PE-HD, 1,5 Gew.-% Myristinsäure, 5 Gew.-% Irganox 1010 (Methyl-3-(3,5-di-tert.-butyl-4-hydroxyphenyl)propionat) und 30 Gew.-% Farbpigment Printex alpha.

Bei Einstufenverfahren, wie Monosil-Verfahren, werden das Polymer und die, die Vernetzung initiierende Zusammensetzung, das Master-Kit oder in einer Alternative nur das Polymer-Kit, in den Extruder gegeben und die resultierende Masse in einem Schritt zum Endprodukt verarbeitet. Geigneterweise wird eine Zusammensetzung eingesetzt, umfassend eine organofunktionelle Silan-Verbindung, insbesondere der Formel III, einen Radikalbildner, sowie eine Silicium enthaltende Vorläuferverbindung der Myristinsäure oder eine Myristinsäure und gegebenenfalls einen Stabilisator.

Für die Herstellung gefüllter Kunststoffe wird der anorganische Füllstoff meist dem Aufbereitungsaggregat direkt zugeführt und mit dem Polymer zum Endprodukt verarbeitet. Optional kann der Füllstoff auch zu einem späteren Zeitpunkt in das Aggregat eingeführt werden, z. B. beim Zweischnecken-Extruder oder Co-Kneter. Das unter Einsatz des erfindungsgemäßen Master-Kits erzeugte Pfropfpolymerisat ermöglicht eine deutliche Verbesserung der Kompatibilität von unpolarem Polymer und polarem Füllstoff, wie Aluminiumhydroxid oder Magnesiumhydroxid.

Daneben besteht die Möglichkeit, separat ein Pfropfpolymerisat, insbesondere Sioplas-Material, herzustellen, gegebenenfalls zu granulieren, abzupacken, insbesondere feuchtigkeitsgeschützt, zu lagern und dieses dann als Basismaterial an einen Weiterverarbeiter, beispielsweise einen Kabelproduzenten oder Rohrhersteller, zu liefern, der seinerseits durch Einarbeitung von Füllstoffen gefüllte Kunststoffendprodukte herstellt.

Die folgenden Beispiele erläutern das erfindungsgemäße Master-Kit, das erfindungsgemäße Polymer-Kit und die erfindungsgemäßen Verfahren näher, ohne die Erfindung auf diese Beispiele zu beschränken.

### A) Herstellung von Alkyl-, Alkenyltricarboxylsilan oder Tetracarboxysilan

### Allgemeine Beispiele:

a) Zur Herstellung von Alkenyltricarboxysilan wird 1 mol eines Alkenyltrichlorsilans, bzw. allgemein ein Alkenyltrihalogensilan, mit 3 mol oder einem Überschuss der organischen mono-Carbonsäure direkt umgesetzt oder in einem inerten Lösemittel, insbesondere bei erhöhter Temperatur, umgesetzt.
b) Zur Herstellung eines Alkyltricarboxysilans wird entsprechend 1 mol eines Alkyltrichlorsilans mit 3 mol oder einem Überschuss einer organischen mono-Carbonsäure direkt umgesetzt oder in einem inerten Lösemittel umgesetzt. Bevorzugt erfolgt die Umsetzung bei erhöhter Temperatur, beispielsweise bis zur Siedetemperatur des Lösemittels oder um die Schmelztemperatur der organischen Fettsäure bzw. der organischen Säure.
c) Zur Herstellung von Tetracarboxysilanen wird 1 mol Tetrahalogensilan, insbesondere Tetrachlorsilan oder Tetrabromsilan, mit 4 mol oder einem Überschuss mindestens einer mono-Carbonsäure, beispielsweise einer Fettsäure oder Fettsäuremischung umgesetzt. Die Umsetzung kann direkt durch Aufschmelzen oder in einem inerten Lösemittel, vorzugsweise bei erhöhter Temperatur, erfolgen.

### Beispiel 1 Herstellung von Vinyltristearylsilan (Vergleich)

Reaktion von 1 mol Vinyltrichlorsilan mit 3 mol Stearinsäure in Toluol als Lösungsmittel: 50 g Stearinsäure (50,1g) wurden mit 150,0 g Toluol in einem Kolben vorgelegt. Nach leichtem Erwärmen löst sich der Feststoff auf. Nach dem Abkühlen bildete sich eine trübe, hochviskose Masse, die sich beim erneuten Aufwärmen wieder in eine klare Flüssigkeit zurückbildet. Das Ölbad wurde bei Versuchsbeginn auf 95°C eingestellt, nach ca. 20 min Mischzeit lag eine klare Flüssigkeit vor. Anschließend wurden 9,01 g Vinyltrichlorsilan zügig mit einer Pipette zugetropft. Etwa 10 min später lag eine klare Flüssigkeit vor und die Öltemperatur wurde auf 150°C eingestellt. Nach circa weiteren 3 h nach Versuchsbeginn wurde unter Inertgasatmosphäre abgekühlt. Die Aufarbeitung erfolgte durch destillative Entfernung des Toluols. Erhalten wurde weißer Feststoff, der im geschmolzenen Zustand ölig und gelblich aussieht. Zur weiteren Reinigung kann der Feststoff erneut im Rotationsverdampfer behandelt werden, beispielsweise über einen längeren Zeitpunkt (3 - 5h) bei einer Ölbadtemperatur von ca. 90°C und ein Vakuum < 1 mbar. Der Feststoff wurde über NMR (¹H, ¹³C, ²⁹Si) als Vinyltrichlorsilan charakterisiert.

### Beispiel 2 Herstellung von Vinyltridecansäure (Vergleich)

Reaktion von 1 mol Vinyltrichlorsilan mit 3 mol Caprinsäure in Toluol als Lösungsmittel: 60,0 g Caprinsäure (Decansäure) wurden mit 143,6 g Toluol in einem Kolben vorgelegt. Bei Versuchsbeginn wurde das Ölbad auf 80°C eingestellt und bei einer Sumpftemperatur von ca. 55°C das Vinyltrichlorsilan langsam zugetropft (ca. 0,5 h für 19,1 g). Nach ca. 45 min wurde die Öltemperatur auf 150°C erhöht. Nach ca. weiteren 2 h Reaktionszeit wurde das Ölbad abgestellt, wobei das Rühren, die Wasserkühlung und die Stickstoffüberlagerung bis zur vollständigen Abkühlung fortgesetzt wurden. Die klare Flüssigkeit wurde in einen Einhalskolben umgefüllt und per Rotationsverdampfer das Toluol abgezogen. Als Ölbadtemperatur wurden ca. 80°C eingestellt. Das Vakuum wurde schrittweise auf < 1 mbar eingestellt. Das Produkt war eine klare Flüssigkeit. Die Flüssigkeit wurde über NMR (¹H, ¹³C, ²⁹Si) als Vinyltricaprylsilan charakterisiert.

### Beispiel 3 Herstellung von Hexadecyltricaprylsilan (Vergleich)

Reaktion von 1 mol Dynasylan^{®} 9016 (Hexadecyltrichlorsilan) mit 3 mol Caprinsäure in Toluol als Lösungsmittel: 73,1 g Caprinsäure (Decansäure) wurden mit 156,2 g Toluol in einem Kolben vorgelegt. Bei Versuchsbeginn wurde das Ölbad auf 95°C eingestellt und 50,8 g Dynasylan^{®} 9016 über etwa 25 Minuten zugetropft. Nach ca. 30 min wurde die Öltemperatur auf 150°C erhöht. Nach ca. 1,5 h Rückfluss wurde der Versuch beendet. Der klaren Flüssigkeit wurde per Rotationsverdampfer das Toluol abgezogen. Als Ölbadtemperatur wurden ca. 80°C eingestellt. Das Vakuum wurde schrittweise auf < 1 mbar eingestellt. Das Produkt war eine ölig gelbe Flüssigkeit mit leicht stechendem Geruch. Die Flüssigkeit wurde über NMR (¹H, ¹³C, ²⁹Si) im Wesentlichen als Hexadecyltricarprylsilan charakterisiert.

### Beispiel 4 Herstellung von Vinyltripalmitylsilan (Vergleich)

Reaktion von 1 mol Vinyltrichlorsilan mit 3 mol Palmitinsäure in Toluol als Lösungsmittel: 102,5 g Palmitinsäure wurden mit 157,0 g Toluol in einem Kolben vorgelegt. Bei Versuchsbeginn wurde das Ölbad auf 92°C eingestellt und das 22,0 g Vinyltrichlorsilan langsam über etwa 15 Minuten zugetropft. Nach ca. 70 min wurde die Öltemperatur auf 150°C erhöht. Es wurde circa 4 h unter Rückfluss erhitzt und anschließend das Toluol abdestilliert. Als Ölbadtemperatur wurden ca. 80°C eingestellt und das Vakuum schrittweise auf 2 mbar eingestellt. Nach dem Abkühlen des Produktes ergab sich ein weißer, wiederaufschmelzbarer Feststoff. Der Feststoff konnte über NMR (¹H, ¹³C, ²⁹Si) als Vinyltripalmitylsilan charakterisiert werden.

### Beispiel 5 Herstellung von Chlorpropyltripalmitylsilan (Vergleich)

Reaktion von 1 mol CPTCS (Chlorpropyltrichlorsilan) mit 3 mol Palmitinsäure in Toluol als Lösungsmittel: 40,01 g Palmitinsäure wurden im Dreihalskolben vorgelegt und das Ölbad aufgeheizt. Nachdem die gesamte Palmitinsäure aufgelöst war, wurden 11,03 g des CPTCS (Reinheit von 99,89% (GC/WLD)) innerhalb von ca. 10 min zugetropft. Abschließend wurde die Temperatur auf 130°C erhöht. Nach ca. 3,5 h wurde keine Gasaktivität in einer angeschlossenen Gaswaschflasche mehr beobachtet und die Synthese beendet. Das Toluol wurde im Rotationsverdampfer entfernt. Zu einem späteren Zeitpunkt wurde der Feststoff erneut aufgeschmolzen und bei einer Ölbadtemperatur von ca. 90°C und einem Vakuum von < 1 mbar gerührt. Nach ca. 4,5 h wurden keine Gasblasen mehr festgestellt. Der Feststoff wurde per NMR (¹H, ¹³C, ²⁹Si) als Chlorpropyltripalmitylsilan charakterisiert.

### Beispiel 6 Herstellung von Propyltrimyristylsilan

Reaktion von 1 mol PTCS (Propyltrichlorsilan, 98,8% Reinheit) mit 3 mol Myristinsäure in Toluol als Lösungsmittel. Die Umsetzung erfolgte analog den vorgenannten Beispielen. Das Reaktionsprodukt konnte als Propyltrimyristylsilan charakterisiert werden.

### Beispiel 7 Herstellung von Vinyltrimyristylsilan

Umsetzung Dynasylan® VTC mit Myristinsäure: 40,5 g Myristinsäure und 130 g Toluol werden in den Reaktionskolben vorgelegt, vermischt und auf ca.60 °C erwärmt. Mittels Tropftrichter wird innerhalb 15 min 9,5 g Dynasylan® VTC zugetropft. Bei Zugabe erhöht sich die Temperatur im Kolben um ca. 10 °C. Nach der Zugabe wird 15 Minuten nachgerührt und danach die Temperatur des Ölbades auf 150 °C erhöht. Während des Nachrührens ist eine Gasentwicklung (HCL-Gas) zu beobachten. Es wurde solange nachgerührt bis keine Gasentwicklung mehr zu beobachten war (Gasabgangshahn) und 3h nachgerührt. Nach Abkühlen des Ansatzes wird nicht umgesetztes Dynasylan® VTC, Toluol bei ca. 80°C und unter vermindertem Druck (0,5 mbar) abdestilliert. Das im Reaktionskolben verbleibende Produkt wird über Nacht im Kolben mit N₂-Überlagerung gelagert und dann ohne weitere Aufarbeitung abgefüllt. Das Produkt wird später fest. Es wurden etwa 44,27 g Rohprodukt erhalten.

### Beispiel 8 Herstellung von Propyltrimyristylsilan

Umsetzung Dynasylan® PTCS mit Myristinsäure: 40,5g Myristinsäure und 150g Toluol werden in den Reaktionskolben vorgelegt, vermischt und auf ca.60°C erwärmt. Mittels Tropftrichter wird innerhalb 15 Minuten Dynasylan® PTCS zugetropft. Bei Zugabe erhöht sich die Temperatur im Kolben um ca. 10 °C. Nach der Zugabe wird die Temperatur des Ölbades auf 150 °C erhöht und 3 h nachgerührt. Während des Nachrührens ist eine Gasentwicklung, HCL-Gas, zu beobachten. Es wurde solange nachgerührt bis keine Gasentwicklung mehr am Gasabgangshahn zu beobachten war. Nach Abkühlen des Ansatzes wird nicht umgesetztes Dynasylan® PTCS, Toluol bei circa 80 °C und unter vermindertem Druck (0,5 mbar) abdestilliert.

Das Produkt wird unter Inertgas aufbewahrt und wurde fest. Es wurden etwa 44,0 g Rohprodukt erhalten.

### B) Vernetzungsbeispiele:

Dynasylan^{®} SILFIN 24 (Vinyltrimethoxy (VTMO), Peroxid und Verarbeitungshilfsm ittel)

### Beispiel 9 Pfropfen PE-HD Dynasylan^{®} SILFIN 24 mit Masterbatch

Pfropfen von 95 Gew.-% PE-HD Dynasylan® SILFIN 24 mit 5 Gew.-% Masterbatch, Vernetzung bei 80 °C im Wasserbad. Im Masterbatch waren 2 Gew.-% Katalysator enthalten.

**Tabelle 1: Übersicht Einsatzstoffe und Gelgehalte**

| Katalysator | Gel [%] 0h | Gel [%] 4h bei 80°C Wasserbad | Gel [%] 22h bei 80°C Wasserbad |
|---|---|---|---|
| Behensäure (Vergleich) | 17 | 36 | 53 |
| Tryptophan (Vergleich) | 9 | 18 | 34 |
| L-Phenylalanin (Vergleich) | 16 | 26 | 39 |
| L-Leucin (Vergleich) | 1 | 30 | 46 |
| Blindwert (Vergleich) | 13 | 16 | 34 |
| Caprylsäure (Vergleich) | 25 | 37 | 49 |
| Oleinsäure (Vergleich) | 22 | 42 | 52 |
| Caprinsäure (Vergleich) | 23 | 36 | 44 |
| Stearinsäure (Vergleich) | 24 | 44 | 56 |
| Palmitinsäure (Vergleich) | 25 | 39 | 53 |
| Myristinsäure | 23 | 37 | 49 |
| Laurinsäure (Vergleich) | 31 | 37 | 48 |

Alle getesteten Fettsäuren und Aminosäuren beschleunigen eine Vernetzungsreaktion im silanmodifizierten Polymer.

### Beispiel 10 Pfropfen PE-HD Dynasylan® SILFIN 24 mit Masterbatch

Wie Beispiel 9 nur mit 0,2 Gew.-% Katalysator-Gehalt im Masterbatch.

**Tabelle 2: Übersicht Einsatzstoffe und Gelgehalte**

| Katalysator | Gel [%] 0h | Gel [%] 4h bei 80°C Wasserbad | Gel [%] 22h bei 80°C Wasserbad |
|---|---|---|---|
| Blindwert (Vergleich) | 1,00 | 11 | 25,37 |
| Stearinsäure (Vergleich) | 34 | 54,08 | 62,35 |
| Palmitinsäure (Vergleich) | 29 | 48,60 | 62,43 |

### Beispiel 11 Pfropfen PE-HD Dynasylan^{®} SILFIN 24 mit Masterbatch

Wie Beispiel 9 nur mit 0,5 Gew.-% Katalysator-Gehalt im Masterbatch.

**Tabelle 3: Übersicht Einsatzstoffe und Gelgehalte**

| Katalysator | Gel [%] 0h | Gel [%] 4h bei 80°C Wasserbad | Gel [%] 22h bei 80°C Wasserbad |
|---|---|---|---|
| Blindwert (Vergleich) | 1 | 11 | 25 |
| Caprinsäure (Vergleich) | 39 | 60 | 60 |
| Caprylsäure (Vergleich) | 39 | 60 | 61 |
| Myristinsäure | 38 | 59 | 64 |
| Behensäure (Vergleich) | 37 | 58 | 64 |
| Stearinsäure (Vergleich) | 37 | 61 | 66 |
| Oleinsäure (Vergleich) | 49 | 62 | 65 |
| Palmitinsäure (Vergleich) | 48 | 63 | 66 |
| Tegokat 216 (DOTL) (Vergleich) | 67 | 70 | 69 |

### Beispiel 12 Pfropfen PE-HD Dynasylan^{®} SILFIN 24 mit Masterbatch

Wie Beispiel 9 nur mit 1,0 Gew.-% Katalysator-Gehalt im Masterbatch.

**Tabelle 4: Übersicht Einsatzstoffe und Gelgehalte**

| Katalysator | Gel [%] 0h | Gel [%] 4h bei 80°C Wasserbad | Gel [%] 22h bei 80°C Wasserbad |
|---|---|---|---|
| Blindwert (Vergleich) | 12,51 | 16,43 | 33,60 |
| Behensäure (Vergleich) | 16,64 | 35,71 | 52,97 |
| Stearinsäure (Vergleich) | 24,17 | 43,86 | 55,72 |
| Oleinsäure (Vergleich) | 22,38 | 41,78 | 52,37 |
| Palmitinsäure (Vergleich) | 24,78 | 38,82 | 53,19 |
| Myristinsäure | 23,08 | 37,40 | 48,97 |
| Caprinsäure (Vergleich) | 22,91 | 35,79 | 44,18 |
| Tegokat 216 (DOTL) (Vergleich) | 44,12 | 61,37 | 65,79 |
| Caprylsäure (Vergleich) | 24,87 | 37,40 | 49,26 |

### Beispiel 13 Pfropfen PE-HD Dynasylan^{®} SILFIN 24 mit Masterbatch

Silangepfropftes PE-HD wird mit Myristinsäure in unterschiedlichen Dosierungen umgesetzt.

**Tabelle 5: Übersicht Einsatzstoffe und Gelgehalte, 1,2 phr Dynasylan^{®} SILFIN 24**

| Katalysator | Gel [%] 0h | Gel [%] 4h bei 80°C Wasserbad | Gel [%] 22h bei 80°C Wasserbad |
|---|---|---|---|
| Blindwert (Vergleich) | 0 | 0 | 26 |
| 0,2 Gew.-% Myristinsäure | 29 | 60 | 70 |
| 0,075 Gew.-% DOTL (Vergleich) | 40 | 70 | 73 |
| 0,5 Gew.-% Myristinsäure | 33 | 68 | 75 |
| 1,0 Gew.-% Myristinsäure | 47 | 72 | 76 |

### Beispiel 14 Pfropfen PE-HD Dynasylan^{®} SILFIN 24 mit Masterbatch

Silangepfropftes PE-HD wird mit Myristinsäure in unterschiedlichen Dosierungen umgesetzt.

**Tabelle 6: Übersicht Einsatzstoffe und Gelgehalte, 1,4 phr Dynasylan^{®} SILFIN 24**

| Katalysator | Gel [%] 0h | Gel [%] 4h bei 80°C Wasserbad | Gel [%] 22h bei 80°C Wasserbad |
|---|---|---|---|
| Blindwert (Vergleich) | -0,37 | 0,73 | 29,72 |
| 0,2 Gew.-% Myristinsäure | 21,46 | 58,79 | 70,39 |
| 0,075 Gew.-% DOTL (Vergleich) | 38,97 | 70,97 | 75,19 |
| 0,5 Gew.-% Myristinsäure | 21,46 | 58,79 | 70,39 |
| 1,0 Gew.-% Myristinsäure | 37,69 | 70,16 | 76,02 |

### Beispiel 15 Pfropfen PE-HD Dynasylan^{®} SILFIN 24 mit Masterbatch

Silangepfropftes PE-HD wird mit Myristinsäure in unterschiedlichen Dosierungen umgesetzt.

**Tabelle 7: Übersicht Einsatzstoffe und Gelgehalte, 1,6 phr Dynasylan^{®} SILFIN 24**

| Katalysator | Gel [%] 0h | Gel [%] 4h bei 80°C Wasserbad | Gel [%] 22h bei 80°C Wasserbad |
|---|---|---|---|
| Blindwert (Vergleich) | 0 | 2 | 35 |
| 0,2 Gew.-% Myristinsäure | 27 | 65 | 73 |
| 0,075 Gew.-% DOTL (Vergleich) | 44 | 73 | 78 |
| 0,5 Gew.-% Myristinsäure | 36 | 71 | 76 |
| 1,0 Gew.-% Myristinsäure | 56 | 77 | 78 |

Die vorstehenden Versuche belegen, dass mit Myristinsäure vergleichbare Gelgehalte wie mit DOTL erzielt werden. Bei Verwendung von Myristinsäure werden bei den vernetzten Produkten selbst bei hohen Konzentrationen an Myristinsäure keine bis wenige Ausblühungen beobachtet.

Für die vorstehenden Beispiele 12 bis 15 wurden als Katalysator: 0,2, 0,5 und 1,0 Gew.-% an Katalysator-Gehalt (Myristinsäure), 0,075 Gew.-% DOTL (Standardmasterbatch) gegen einen Blindwert gemessen. Dazu wurde gepfropftes PE-HD mit 1,2; 1,4 und 1,6phr Dynasylan^{®} SILFIN 24 hergestellt. Das silangepropfte PE wurde mit jeweils 5 Gew.-% des Katalysatormasterbatches gemischt und im Kneter verarbeitet. Die Verarbeitung erfolgte auf einem HAAKE Laborkneter, anschließend wurden bei 200°C Platten gepresst und im Wasserbad bei 80°C vernetzt.

Verarbeitungsparameter:
Kneter, Einfülltrichter, Bandwerkzeug, Bandabzug; gefüllte Einzugszone,
Drehzahl: 30 rpm,
Temperaturprofil: 140 °C/3min;2 min auf 210 °C;210 °C/5min
Vernetzungszeit: 0 h, 4 h und 22 h

### Beispiel 16 Schritt A - Pfropfen von PE-HD MG9641 S von Borealis mit Dynasylan^{®} SILFIN 24 Mischungen

Die Pfropfung erfolgte auf dem Doppelschnecken - Extruder (ZE 25) von Berstorff. In den Versuchen wurden Stränge hergestellt. Dem PE wurde die Vernetzerzubereitung jeweils 1 h lang aufgetrommelt, wobei es vorher ca. 1 h lang bei 70°C vorgetrocknet wurde. Die gepfropften Stränge wurden nach der Extrusion granuliert. Die Granulate wurden direkt nach der Granulierung in mit einer Aluminiumschicht beschichteten Tüten abgepackt und eingeschweißt. Vor dem Einschweißen wurden die Granulate mit Stickstoff überlagert.

Verarbeitungsparameter der Pfropfungsreaktion auf der ZE 25
Temperaturprofil- -/150/160/200/200/210/210/210 °C,
Drehzahl: ca. 100 U/min, Zugabe: 1,5 phr Dynasylan® SILFIN 24

### Schritt B - Verarbeitung für die Vernetzungsstudie

Das silangepfropfte Polyethylen wurde in einem Laborkneter (Fa. Thermo HAAKE, 70 cm³) mit dem jeweiligen Katalysator geknetet (Temperaturprofil: 140°C/3min; 2 min auf 210°C; 210°C/5min, Kneterdrehzahl: 30 rpm). Anschließend wurde die Mischung bei 200°C zu Platten gepresst. Die Vernetzung erfolgte in einem Wasserbad bei 80°C vernetzt (4h). Es wurden die Gelgehalte der vernetzten Platten bestimmt (8h, p-Xylol, Soxhlett-Extraktion).
1) Screening mit verschiedenen Fettsäuren als Katalysator bei einer Konzentration von 0,5 Gew.-% im Vergleich zum Zinn-Katalysator

**Tabelle 8: Gelgehalte der Studie mit verschiedenen Fettsäuren als Katalysator im Vergleich zu einem Zinn-Katalysator**

| Katalysator | Gel [%] 4h bei 80°C Wasserbad | Bemerkungen |
|---|---|---|
| Ohne Katalysator (Vergleich) | 11 | |
| Caprylsäure (Vergleich) | 60 | Starker, stechender Geruch |
| Myristinsäure | 59 | |
| Stearinsäure (Vergleich) | 61 | Wachsartige Ausblühungen bzw. Ausschwitzten an Probeoberfläche |
| Palmitinsäure (Vergleich) | 63 | Wachsartige Ausblühungen bzw. Ausschwitzten an Probeoberfläche |
| Di-Octyl-Zinn-di-laurat (Vergleich) | 70 | |

2) Screening mit Fettsäuren, Vorläuferverbindungen der Fettsäuren und Aminosäuren

Es wurden jeweils 95 Gew.-% silangepfropftes PE mit 5 Gew.-% Katalysatormasterbatch, wobei der Katalysatormasterbatch zu 98 Gew.-% PE-HD und zu 2 Gew.-% Katalysator (organische Säure) aufwies. Die Ergebnisse können der Tabelle 9 entnommen werden.

**Tabelle 9: Gelgehalte der Studie mit verschiedenen Katalysatoren**

| Katalysator | Gel [%] 22h bei 80°C Wasserbad | Katalysatortyp |
|---|---|---|
| Ohne Katalysator (Vergleich) | 34 | - |
| Magnesiumstearat (Vergleich) | 37 | Organische Säure enthaltende siliciumfreie Vorläuferverbindung der Fettsäure |
| L-Leucin (Vergleich) | 46 | Aminosäure |
| Hexadecyl-tri-Palmitinsäuresilan (Vergleich) | 49 | Silicium enthaltende Vorläuferverbindung einer Fettsäure |
| Behensäure (Vergleich) | 53 | Fettsäure |
| Tegokat 216 (DOTL) (Vergleich) | 66 | Zinnkatalysator |

### Beispiel 17

### a) Pfropfen von PE-HD MG9641 S von Borealis mit den Dynasylan^{®} SILFIN 24

Die Pfropfung erfolgte auf dem Extruder ZE 25 von Berstorff. Dem PE wurde die Vernetzerzubereitung jeweils 1 h lang aufgetrommelt, wobei es vorher ca. 1 h lang bei 70 °C vorgetrocknet wurde. Die gepfropften Stränge wurden nach der Extrusion granuliert. Die Granulate wurden direkt nach der Granulierung in Polyethylen-Alluminium-Polyethylen-Umverpackungen abgepackt und eingeschweißt. Vor dem Einschweißen wurden die Granulate mit Stickstoff überlagert.
Verarbeitungsparameter der Pfropfungsreaktion auf der ZE 25
Temperaturprofil: -/150/160/200/200/210/210/210 °C,
Drehzahl: ca. 100 U/min,
Zugabe: 1,5 phr Dynasylan^{®} SILFIN 24 (CS/V039/08)

### b) Knetungen

Zur Herstellung des Masterbatches werden einem HAAKE Laborkneter 49,0 g PE mit 1,0 g Katalysator geknetet, organische Säure oder Silicium enthaltende Vorläuferverbindung.

### Verarbeitungsparameter:

Kneter, Einfüllrichter, Bandwerkzeug, Bandabzug; gefüllte Einzugszone,
Drehzahl: 30 rpm,
Temperaturprofil: 200°C/5min

### c) Herstellung Mischung aus 95 Gew.-% PE-HD Silfin 24 mit 5 Gew.-% Masterbatch

Eine Mischung aus 95 Gew.-% PE-HD Silfin 24 werden mit 5 Gew.-% des Masterbatches, der den Katalysator aufweist, hergestellt. Die Verarbeitung erfolgte auf einem HAAKE Laborkneter. Eine Mischung aus 95 Gew.-% PE-HD Silfin 24 Mischung mit 5 Gew.-% Masterbatch werden geknetet, anschließend bei 200°C zu Platten gepresst und zuletzt im Wasserbad bei 80°C vernetzt.

### Verarbeitungsparameter:

Kneter, Einfüllrichter, Bandwerkzeug, Bandabzug; gefüllte Einzugszone,
Drehzahl: 30 rpm,
Temperaturprofil: 140 °C/3min;2 min auf 210 °C;210 °C/5min
Vernetzungszeit: 0 h, 4 h und 22 h

### Beispiel 18 Vernetzung von silangepfropftem PE-HD

Im HAAKE-Messkneter wurde Polyethylen mit verschiedenen Vinylsilanen unter Zugabe von Peroxid chemisch modifiziert (gepfropft, Drehzahl: 30 1/min, TempProfil: 3 min bei 140°C, 2 min von 140°C auf 200°C, 10 min 200 °C). Nach Abschluss der Pfropfreaktion wurde Aluminiumtrihydroxid (ATH) als Wasserspender in den Kneter gegeben. Es wurde getestet, ob eine Nachvernetzung über eine starke Drehmomentserhöhung nachgewiesen werden kann. Folgende Mischungen wurden verwendet:

**Tabelle 10: Versuchsansätze**

| | Dynasylan^{®} VTMO | Vinyl-tri-Palmitinsäure-Silan (Vergleich) | Vinyl-tri-Caprinsäure-Silan (Vergleich) |
|---|---|---|---|
| BCUP (tert-Butylcumylperoxid) | ∼0,1 g | ∼0,14g | ∼0,1 |
| Silan enthaltende Verbindung | ∼0, 55 g | ∼1,1 g | ∼1,3 |
| PE-HD | 50 g | | |
| ATH | 2g | | |

Beide Versuche mit Vinyl-tri-carboxysilanen zeigten nach Zugabe des ATH eine starke Drehmomentzunahme. Die Zunahme war erheblich stärker als beim Vinyltrimethoxysilan. Hierüber wird auf eine stärkere Vernetzungsreaktion geschlossen.

### Beispiel 19 Vernetzung von PE-HD - Vergleich von Vinyl-Tri-Palmitinsäure-Silan mit Dynasylan^{®} SILFIN 06

Für diese Untersuchung wurden dem PE-HD Pulver die einzelnen Vernetzungszubereitungen beigemengt und im Kneter (Drehzahl: 35 1/min, TProfil: 2 min bei 150°C, in 3 min von 150 auf 210°C, 5 min bei 210 °C)verarbeitet. In Tabelle 11 sind die Rezepturen aufgelistet:

**Tabelle 11: Rezeptur**

| | Vinyl-tri-Palmitin-säuresilan (Vergleich) |
|---|---|
| DCUP (Dicumylperoxid) | 0,025 g |
| Silan enthaltende Verbindung | 1,5 g |
| PE-HD | 50 g |

Die geknetete Probe wurde zu einer Platte gepresst und anschließend im Wasserbad bei 80°C vernetzt. Es wurde der Gelgehalt der vernetzten Proben nach verschiedenen Lagerzeiten gemessen.

**Tabelle 12: Gelgehalte der vernetzten Proben -**

| Vernetzungsdauer Wasserbad, 80°C | Gelgehalt Vinyl-tri-Palmitinsäure-Silan [%](Vergleich) |
|---|---|
| 0,5 h | 32 |
| 1 h | 32 |
| 2 h | 31 |
| 4 h | 33 |
| 24 h | 31 |

### Beispiel 20 Master-Kit (Masterbatch)

Die hergestellten Carboxy-Silane wurden als Katalysatoren im Sioplas-Verfahren eingesetzt. Dazu wurden 95 Gew.-% eines mit Dynasylan^{®} SILFIN 24 gepfropften Polyethylens mit 5 Gew.-% des erfindungsgemäßen Katalysatorkonzentrats (Kat-MB) geknetet. Zunächst ist ein Masterbatch mit 1 g des jeweiligen Katalysators und 49 g PE-HD im Kneter hergestellt worden (Temp.-Profil: 5 min bei 200°C). Von diesem wurden dann 2,5 g zusammen mit 47,5 g des extrudierten Dynasylan^{®} SILFIN 24 PE-HD geknetet (Temp.-Profil: 3 min bei 140°C, von 140°C auf 210°C in 2 min, 5 min bei 210°C) und anschließend bei 200 °C zu Platten gepresst und zuletzt im Wasserbad bei 80°C vernetzt. Das Kat-MB beinhaltete jeweils 2 Gew.-% des jeweiligen Katalysators, insbesondere der Vinyltricarboxylsilane oder Fettsäuren. Verglichen wurden die Ergebnisse mit einem Ansatz ohne Katalysator. Die Platten wurden im Wasserbad bei 80°C vernetzt. In Tabelle 13 sind die Ergebnisse dieser Vernetzungsstudie dargestellt.

**Tabelle 13: Übersicht der Katalysatorstudie im Sioplas Verfahren**

| Katalysator/Versuchsnummer | Gelgehalt [%] Unvernetzt | Gelgehalt [%] 4h bei 80°C Wasserbad | Gelgehalt [%] 22h bei 80°C Wasserbad |
|---|---|---|---|
| Blindwert - kein Kat. (Vergleich) | 13 | 16 | 34 |
| Vinyl-tri-Palm itinsäure-Silan (Vergleich) | 17 | 33 | 46 |
| Hexadecyl-tri-Palm itinsäure-Silan (Vergleich) | 18 | 40 | 49 |
| Vinyl-tri-Caprinsäure-Silan (Vergleich) | 23 | 36 | 46 |
| Hexadecyl-tri-Caprinsäure-Silan (Vergleich) | 23 | 39 | 45 |
| Caprinsäure (Vergleich) | 23 | 36 | 44 |
| Palmitinsäure (Vergleich) | 25 | 39 | 53 |

## Patentansprüche

1. Master-Kit enthaltend eine Komponente-A, worin 0,1 bis 20 Gew.-% in der Komponente-A mindestens eine Silicium enthaltende Vorläuferverbindung der Myristinsäure oder mindestens eine Myristinsäure oder eine Myristinsäure enthaltende siliciumfreie Vorläuferverbindung bedeutet und ein Trägermaterial, ein Stabilisator, ein Zusatzstoff oder Mischungen dieser enthalten ist, wobei die genannten Inhaltsstoffe der Komponente-A 100 Gew. % ausmachen.

2. Master-Kit nach Anspruch 1, **dadurch gekennzeichnet, dass** 0,1 bis 20 Gew.-% in der Komponente-A mindestens eine Myristinsäure oder eine Myristinsäure enthaltende siliciumfreie Vorläuferverbindung bedeutet und ein Trägermaterial, ein Stabilisator, ein Zusatzstoff oder Mischungen dieser enthalten ist, wobei die genannten Inhaltsstoffe der Komponente-A 100 Gew. % ausmachen.

3. Master-Kit nach einem der Ansprüche 1 bis 2, **dadurch gekennzeichnet, dass** dieses eine Komponente B enthält, wobei 60 bis 99,9 Gew.-% in der Komponente B eine organofunktionelle Silan-Verbindung der Formel III ist
(B)_{b}SiR⁴ₐ(OR⁵)_{3-b-a} (III)
- wobei unabhängig voneinander b gleich 0, 1, 2 oder 3 und a gleich 0, 1, 2 oder 3 ist, mit der Maßgabe, dass in Formel III b+a kleiner gleich (≤) 3 ist,
- B unabhängig voneinander für eine einwertige Gruppe in Formel III (R⁷)₂C=C(R⁷)-E_{q}-, worin R⁷ gleich oder verschieden sind und R⁷ ein Wasserstoffatom oder eine Methylgruppe oder eine Phenylgruppe ist, die Gruppe E eine Gruppe aus der Reihe -CH₂-, -(CH₂)₂-, -(CH₂)₃-, -O(O)C(CH₂)₃- oder -C(O)O-(CH₂)₃- darstellt, q gleich 0 oder 1 ist, oder Isoprenyl, Hexenyl, Clyclohexenyl, Terpenyl, Squalanyl, Squalenyl, Polyterpenyl, Betulaprenoxy, cis/trans-Polyisoprenyl, oder einer Gruppe R⁶-Dₚ-[C(R⁶)=C(R⁶)-C(R⁶)=C(R⁶)]ₜ-Dₚ- entspricht, worin R⁶ gleich oder verschieden sind und R⁶ ein Wasserstoffatom oder eine Alkylgruppe mit 1 bis 3 C-Atomen oder eine Arylgruppe oder eine Aralkylgruppe, vorzugsweise eine Methylgruppe oder eine Phenylgruppe, bedeutet, Gruppen D gleich oder verschieden sind und D eine Gruppe aus der Reihe -CH₂-, -(CH₂)₂-, -(CH₂)₃-, -O(O)C(CH₂)₃- oder - C(O)O-(CH₂)₃-darstellt und p gleich 0 oder 1 und t gleich 1 oder 2 ist,
- R⁵ unabhängig voneinander Methyl, Ethyl, n-Propyl und/oder iso-Propyl ist, und
- R⁴ unabhängig voneinander eine substituierte oder unsubstituierte Kohlenwasserstoff-Gruppe ist, sowie
gegebenenfalls zu 0,05 bis 10 Gew.-% einen Radikalbildner und gegebenenfalls zu 0,05 bis 10 Gew.-% mindestens einen Stabilisator und/oder zu 0,05 bis 99,99 Gew.-% mindestens ein Trägermaterial, Stabilisator, Zusatzstoff oder Mischungen dieser enthält, wobei die Mengenangaben insgesamt 100 Gew.-% in der Komponente-B ergeben.

4. Verfahren zur Herstellung von Polymercompounds, indem
1) ein Gemisch aus thermoplastischem Basispolymer mit a) mindestens einer Silicium enthaltenden Vorläuferverbindung der Myristinsäure und/oder einer organofunktionellen Silan-Verbindung und b) der Myristinsäure oder einer eine Myristinsäure enthaltenden siliciumfreien Vorläuferverbindung sowie einem Radikalbildner in einer Compoundierapparatur umgesetzt werden oder
2) thermoplastisches Basispolymer in einem ersten Schritt mit a) einer organofunktionellen Silan-Verbindung sowie einem Radikalbildner umgesetzt werden und in einem nachfolgenden Schritt unter Zusatz mindestens einer Silicium enthaltenden Vorläuferverbindung der Myristinsäure, einer Myristinsäure enthaltenden siliciumfreien Vorläuferverbindung und/oder der Myristinsäure in Form gebracht wird und unter Einwirkung von Feuchtigkeit vernetzt oder
3) thermoplastisches Basispolymer in einem ersten Schritt mit a) mindestens einer olefinischen Silicium enthaltenden Vorläuferverbindung der Myristinsäure, insbesondere der allgemeinen Formeln I und/oder II
(A)_{z}SiR²ₓ(OR¹)_{4-z-x} (I)
(R¹O)_{3-y-u}(R²)ᵤ(A)_{y}Si - A - Si(A)_{y}(R²)ᵤ(OR¹)_{3-y-u} (II)
- wobei unabhängig voneinander z gleich 1, 2 oder 3, x gleich 0, 1, 2 oder 3, y gleich 0, 1, 2 oder 3 und u gleich 0, 1, 2 oder 3 ist, mit der Maßgabe, dass in Formel I z+x kleiner gleich (≤) 3 ist und in Formel II y+u unabhängig kleiner gleich (≤) 2 ist,
- A unabhängig voneinander in Formel I und/oder II für eine einwertige Olefin-Gruppe, und A als zweiwertiger Rest in Formel II für eine zweiwertige Olefin-Gruppe steht,
- R¹ unabhängig voneinander einer Carbonyl-R³ Gruppe entspricht, wobei R³ einem von Myristinsäure abgeleiteten Kohlenwasserstoffrest entspricht, und
- R² unabhängig voneinander eine Kohlenwasserstoff-Gruppe ist,
sowie einem Radikalbildner umgesetzt werden und in einem nachfolgenden Schritt unter Zusatz mindestens einer Silicium enthaltenden Vorläuferverbindung der Myristinsäure, einer Myristinsäure enthaltenden siliciumfreien Vorläuferverbindung und/oder der Myristinsäure in Form gebracht wird und unter Einwirkung von Feuchtigkeit vernetzt oder
4) Monomer und/oder Prepolymer der thermoplastischen Basispolymere mit a) einer organofunktionellen Silan-Verbindung sowie einem Radikalbildner umgesetzt werden, und in einem nachfolgenden Schritt unter Zusatz mindestens einer Silicium enthaltenden Vorläuferverbindung der Myristinsäure, der Myristinsäure und/oder einer Myristinsäure enthaltenden siliciumfreien Vorläuferverbindung in Form gebracht wird und anschließend unter Einwirkung von Feuchtigkeit vernetzt werden.

5. Verfahren zur Herstellung von Polymercompounds, indem
1) ein Gemisch aus thermoplastischem Basispolymer mit der Komponente B des Master-Kits nach Anspruch 3 und der Komponente A des Master-Kits nach Anspruch 1 in einer Compoundierapparatur umgesetzt werden oder
2) thermoplastisches Basispolymer in einem ersten Schritt mit der Komponente B des Master-Kits nach Anspruch 3 umgesetzt wird und in einem nachfolgenden Schritt unter Zusatz der Komponente A des Master-Kits nach Anspruch 1 in Form gebracht wird und unter Einwirkung von Feuchtigkeit vernetzt wird oder
3) Monomer und/oder Prepolymer der thermoplastischen Basispolymere mit der Komponente B des Master-Kits nach Anspruch 3 umgesetzt wird, und in einem nachfolgenden Schritt unter Zusatz der Komponente A des Master-Kits nach Anspruch 1 in Form gebracht wird und anschließend unter Einwirkung von Feuchtigkeit vernetzt wird oder
4) thermoplastisches Basispolymer mit einem Master-Kit nach Anspruch 1 in einem Monosil-Prozess umgesetzt wird oder
5) thermoplastisches Basispolymer mit einem Master-Kit nach Anspruch 1 in einem Sioplas-Prozess umsetzt wird oder
6) Monomer und/oder Prepolymer der thermoplastischen Basispolymere mit einem Master-Kit nach Anspruch 1 in einem Copolymerisationsverfahren umgesetzt werden.

6. Verfahren nach einem der Ansprüche 4 oder 5, **dadurch gekennzeichnet, dass** ein Master-Kit nach Anspruch 1 bei der Herstellung silangepfropfter oder silan-co-polymerisierter und/oder gefüllter oder ungefüllter Polymercompounds und/oder vernetzter, gefüllter oder vernetzter ungefüllter Polymere verwendet wird.

7. Polymer, Polymercompound, ungefüllter oder gefüllter Kunststoff erhältlich nach einem der Verfahren nach Ansprüchen 4 bis 6.

8. Formkörper erhältlich nach einem der Verfahren nach Ansprüchen 4 bis 6.

9. Polymer-Kit umfassend ein Master-Kit nach Anspruch 1 sowie, insbesondere davon getrennt, als weitere Komponenten ein thermoplastisches Basispolymer, ein silangepfropftes Basispolymer, silan-co-polymerisiertes Basispolymer, ein Monomer oder Prepolymer des Basispolymers und/oder Mischung dieser.

10. Verwendung des Master-Kits nach Anspruch 1 oder des Polymer-Kits nach Anspruch 9 zur Herstellung von gefüllten und/oder ungefüllten Polymercompounds und/oder vernetzten, gefüllten oder vernetzten ungefüllten Polymeren basierend auf thermoplastischen Basispolymeren.

## Claims

1. Masterkit comprising a component A, where from 0.1 to 20% by weight, in component A, is at least one silicon-containing precursor compound of myristic acid, or at least one myristic acid, or one silicon-free precursor compound containing myristic acid and where a carrier material, a stabilizer, an added substance, or a mixture of these is present, where the ingredients mentioned of component A make up 100% by weight.

2. Masterkit according to Claim 1, **characterized in that** from 0.1 to 20% by weight in component A is at least one myristic acid or one silicon-free precursor compound containing myristic acid, where a carrier material, a stabilizer, an additive or a mixture of these is present, where the ingredients mentioned of component A make up 100% by weight.

3. Masterkit according to Claim 1 or 2, **characterized in that** this comprises a component B, where from 60 to 99.9% by weight in component B is an organofunctional silane compound of the formula III
(B)_{b}SiR⁴ₐ(OR⁵)_{3-b-a} (III)
- where, mutually independently, b is 0, 1, 2, or 3, and a is 0, 1, 2, or 3, with the proviso that in formula III b + a is smaller than or equal to (≤) 3,
- B, mutually independently, is a monovalent (R⁷)₂C=C(R⁷)-E_{q}- group in formula III, in which R⁷ are identical or different, and R⁷ is a hydrogen atom or a methyl group or a phenyl group, the group E is a group from -CH₂-, -(CH₂)₂-, -(CH₂)₃-, -O(O)C(CH₂)₃-, or -C(O)O-(CH₂)₃-, q is 0 or 1, or isoprenyl, hexenyl, cyclohexenyl, terpenyl, squalanyl, squalenyl, polyterpenyl, betulaprenoxy, cis/trans-polyisoprenyl, or corresponds to an R⁶-Dₚ-[C(R⁶)=C(R⁶)-C(R⁶)=C(R⁶)]ₜ-Dₚ- group, in which R⁶ are identical or different, and R⁶ is a hydrogen atom or an alkyl group having from 1 to 3 carbon atoms, or an aryl group, or an aralkyl group, preferably a methyl group or a phenyl group, groups D are identical or different, and D is a group from -CH₂-, -(CH₂)₂-, -(CH₂)₃-, -O(O)C(CH₂)₃-, or -C(O)O-(CH₂)₃-, and p is 0 or 1, and t is 1 or 2,
- R⁵ is, mutually independently, methyl, ethyl, n-propyl, and/or isopropyl, and
- R⁴ is, mutually independently, a substituted or unsubstituted hydrocarbon group, and also,
if appropriate, from 0.05 to 10% by weight of a free-radical generator and, if appropriate, from 0.05 to 10% by weight of at least one stabilizer, and/or from 0.05 to 99.99% by weight of at least one carrier material, stabilizer, added substance, or a mixture of these, where the quantitative data give a total of 100% by weight in component B.

4. Process for producing compounded polymer materials, by
1) reacting a mixture made of thermoplastic parent polymer with a) at least one silicon-containing precursor compound of myristic acid and/or one organofunctional silane compound and b) myristic acid or a silicon-free precursor compound containing a myristic acid, and also a free-radical generator, in a compounding apparatus or
2) reacting thermoplastic parent polymer, in a first step, with a) an organofunctional silane compound, and also a free-radical generator, and shaping the material in a subsequent step, with addition of at least one silicon-containing precursor compound of myristic acid, one silicon-free precursor compound containing myristic acid, and/or myristic acid, and crosslinking the material with exposure to moisture or
3) reacting thermoplastic parent polymer in a first step with a) at least one olefinic silicon-containing precursor compound of myristic acid, in particular of the general formulae I and/or II
(A)_{z}SiR²ₓ(OR¹)_{4-z-x} (I)
(R¹O)_{3-y-u}(R²)ᵤ(A)_{y}Si-A-Si(A)_{y}(R²)ᵤ(OR¹)_{3-y-u} (II)
- where, mutually independently, z is 1, 2, or 3, x is 0, 1, 2, or 3, y is 0, 1, 2, or 3, and u is 0, 1, 2, or 3, with the proviso that in formula I z + x is smaller than or equal to (≤) 3, and in formula II y + u is independently smaller than or equal to (≤) 2,
- A is mutually independently in formula I and/or II a monovalent olefin group, and A in the form of a divalent moiety in formula II is a divalent olefin group,
- R¹ corresponds, mutually independently, to a carbonyl-R³ group, where R³ corresponds to a hydrocarbon moiety derived from myristic acid, and
- R² is, mutually independently, a hydrocarbon group,
and also a free-radical generator, and shaping the material in a subsequent step, with addition of at least one silicon-containing precursor compound of myristic acid, one silicon-free precursor compound containing myristic acid, and/or myristic acid, and crosslinking the material with exposure to moisture or
4) reacting monomer and/or prepolymer of the thermoplastic parent polymers with a) an organofunctional silane compound, and also a free-radical generator, and shaping the material in a subsequent step, with addition of at least one silicon-containing precursor compound of myristic acid, myristic acid, and/or one silicon-free precursor compound containing myristic acid, and then crosslinking the material with exposure to moisture.

5. Process for producing compounded polymer materials, by
1) reacting a mixture made of thermoplastic parent polymer with component B of the masterkit according to Claim 3 and component A of the masterkit according to Claim 1, in a compounding apparatus or
2) reacting thermoplastic parent polymer in a first step with component B of the masterkit according to Claim 3, and shaping the material in a subsequent step, with addition of component A of the masterkit according to Claim 1, and crosslinking the material with exposure to moisture or
3) reacting monomer and/or prepolymer of the thermoplastic parent polymers with component B of the masterkit according to Claim 3, and shaping the material in a subsequent step, with addition of component A of the masterkit according to Claim 1, and then crosslinking the material with exposure to moisture or
4) reacting thermoplastic parent polymer with a masterkit according to Claim 1 in a monosil process or
5) reacting thermoplastic parent polymer with a masterkit according to Claim 1 in a sioplas process or
6) reacting monomer and/or prepolymer of the thermoplastic parent polymers with a masterkit according to Claim 1 in a copolymerization process.

6. Process according to Claim 4 or 5, **characterized in that** a masterkit according to Claim 1 is used in the production of silane-grafted or silane-copolymerized and/or filled or unfilled compounded polymer materials, and/or crosslinked, filled, or crosslinked, unfilled polymers.

7. Polymer, compounded polymer material, or unfilled or filled plastic, obtainable by one of the processes according to Claims 4 to 6.

8. Molding obtainable by one of the processes according to Claims 4 to 6.

9. Polymer kit comprising a masterkit according to Claim 1 and also, in particular separately therefrom, as further components, a thermoplastic parent polymer, a silane-grafted parent polymer, a silane-copolymerized parent polymer, a monomer, or prepolymer of the parent polymer, and/or a mixture of these.

10. Use of the masterkit according to Claim 1 or of the polymer kit according to Claim 9 for producing filled and/or unfilled compounded polymer materials, and/or crosslinked, filled, or crosslinked, unfilled polymers based on thermoplastic parent polymers.

## Revendications

1. Kit maître contenant un composant A, dans lequel 0,1 à 20% en poids dans le composant A représente au moins un composé précurseur contenant du silicium de l'acide myristique, ou au moins de l'acide myristique ou un composé précurseur exempt de silicium contenant de l'acide myristique et un matériau support, un stabilisateur, un additif ou des mélanges de ceux-ci, les constituants mentionnés du composant A représentant 100% en poids.

2. Kit maître selon la revendication 1, **caractérisé en ce que** 0,1 à 20% en poids dans le composant A représente au moins un acide myristique ou un composé précurseur exempt de silicium contenant de l'acide myristique et un matériau support, un stabilisateur, un additif ou des mélanges de ceux-ci, les constituants mentionnés du composant A représentant 100% en poids.

3. Kit maître selon l'une quelconque des revendications 1 à 2, **caractérisé en ce qu'**il contient un composant B, 60 à 99,9% en poids dans le composant B représentant un composé organofonctionnel du silane de formule III
(B)_{b}SiR⁴ₐ(OR⁵)_{3-b-a} (III)
- où, indépendamment l'un de l'autre, b vaut 0, 1, 2 ou 3 et a vaut 0, 1, 2 ou 3, à condition que dans la formule III, b + a soit inférieur ou égal (≤) à 3,
- B, indépendamment l'un de l'autre, représente dans la formule III un groupe monovalent (R⁷)₂C=C(R⁷)-Eq-, dans laquelle les radicaux R⁷ sont identiques ou différents et R⁷ représente un atome d'hydrogène ou un groupe méthyle ou un groupe phényle, le groupe E représente un groupe de la série -CH₂-, -(CH₂)₂-, -(CH₂)₃-, -O(O)C(CH₂)₃- ou -C(O)O-(CH₂)₃-, q vaut 0 ou 1, ou isoprényle, hexényle, cyclohexényle, terpényle, squalanyle, squalényle, polyterpényle, bétulaprénoxy, cis/trans-polyisoprényle, ou un groupe R⁶-Dₚ-[C(R⁶)=C(R⁶)-C(R⁶)=C(R⁶)]ₜ-Dₚ-, dans lequel les radicaux R⁶ sont identiques ou différents et R⁶ représente un atome d'hydrogène ou un groupe alkyle comprenant 1 à 3 atomes de carbone ou un groupe aryle ou un groupe aralkyle, de préférence un groupe méthyle ou un groupe phényle, les groupes D sont identiques ou différents et D représente un groupe de la série -CH₂-, -(CH₂)₂-, -(CH₂)₃-, -O(O)C(CH₂)₃- ou - C(O)O-(CH₂)₃- et p vaut 0 ou 1 et t vaut 1 ou 2,
- R⁵ représente, indépendamment l'un de l'autre, méthyle, éthyle, n-propyle et/ou iso-propyle, et
- R⁴ représente, indépendamment l'un de l'autre, un groupe hydrocarboné substitué ou non substitué, et
le cas échéant 0,05 à 10% en poids d'un initiateur de radicaux et
le cas échéant 0,05 à 10% en poids d'au moins un stabilisateur et/ou 0,05 à 99,99% en poids d'au moins un matériau support, un stabilisateur, un additif ou des mélanges de ceux-ci, les indications de quantités représentant au total 100% du composant B.

4. Procédé de préparation de compounds de polymères, dans lequel
1) on transforme un mélange d'un polymère thermoplastique de base avec a) au moins un composé précurseur contenant du silicium de l'acide myristique et/ou un composé organofonctionnel de silane et b) de l'acide myristique ou un composé précurseur exempt de silicium contenant de l'acide myristique ainsi qu'un initiateur de radicaux dans un appareil de compoundage ou
2) on transforme un polymère thermoplastique de base dans une première étape avec a) un composé de silane organofonctionnel ainsi qu'un initiateur de radicaux et on façonne dans une étape consécutive, avec addition d'au moins un composé précurseur contenant du silicium de l'acide myristique, un composé précurseur exempt de silicium contenant de l'acide myristique et/ou de l'acide myristique et on réticule sous l'effet de l'humidité ou
3) on transforme un polymère thermoplastique de base dans une première étape avec a) au moins un composé précurseur oléfinique contenant du silicium de l'acide myristique, en particulier des formules générales I et/ou II
(A)_{z}SiR²ₓ(OR¹)_{4-z-x} (I)
(R₁O)_{3-y-u}(R²)ᵤ(A)_{y}Si-A-Si(A)_{y}(R²)ᵤ(OR¹)_{3-y-u} (II)
- où, indépendamment l'un de l'autre, z vaut 1, 2 ou 3, x vaut 0, 1, 2 ou 3, y vaut 0, 1, 2 ou 3 et u vaut 0, 1, 2 ou 3, à condition que dans la formule I, z + x est inférieur ou égal (≤) à 3 et dans la formule II, y + u, indépendamment l'un de l'autre, est inférieur ou égal (≤) à 2,
- A, indépendamment l'un de l'autre, dans la formule I et/ou II, représente un groupe oléfinique monovalent et A représente, comme radical divalent dans la formule II, un groupe oléfinique divalent,
- R¹ représente, indépendamment l'un de l'autre, un groupe carbonyl-R³, R³ représentant un radical hydrocarboné dérivé de l'acide myristique, et
- R² représente, indépendamment l'un de l'autre, un groupe hydrocarboné,
ainsi qu'un initiateur de radicaux et on façonne dans une étape consécutive, avec addition d'au moins un composé précurseur contenant du silicium de l'acide myristique, un composé précurseur exempt de silicium contenant de l'acide myristique et/ou de l'acide myristique et on réticule sous l'effet de l'humidité ou
4) on transforme un monomère et/ou un prépolymère du polymère thermoplastique de base avec a) un composé de silane organofonctionnel ainsi qu'un initiateur de radicaux et on façonne dans une étape consécutive, avec addition d'au moins un composé précurseur contenant du silicium de l'acide myristique, de l'acide myristique et/ou un composé précurseur exempt de silicium contenant de l'acide myristique puis on réticule sous l'effet de l'humidité.

5. Procédé de préparation de compounds de polymères, dans lequel
1) on transforme un mélange d'un polymère thermoplastique de base avec le composant B du kit maître selon la revendication 3 et le composant A du kit maître selon la revendication 1 dans un appareil de compoundage, ou
2) on transforme un polymère thermoplastique de base dans une première étape avec le composant B du kit maître selon la revendication 3 et dans une étape suivante, on façonne en ajoutant le composant A du kit maître selon la revendication 1 et on réticule sous l'effet de l'humidité ou
3) on transforme un monomère et/ou un prépolymère du polymère thermoplastique de base avec le composant B du kit maître selon la revendication 3 et dans une étape suivante, on façonne en ajoutant le composant A du kit maître selon la revendication 1 puis on réticule sous l'effet de l'humidité ou
4) on transforme le polymère thermoplastique de base avec un kit maître selon la revendication 1 dans un procédé Monosil ou
5) on transforme le polymère thermoplastique de base avec un kit maître selon la revendication 1 dans un procédé Sioplas ou
6) on transforme le monomère et/ou le prépolymère du polymère thermoplastique de base avec un kit maître selon la revendication 1 dans un procédé de copolymérisation.

6. Procédé selon l'une quelconque des revendications 4 ou 5, **caractérisé en ce qu'**on utilise un kit maître selon la revendication 1 lors de la préparation de compounds de polymères greffés par du silane ou copolymérisés avec du silane et/ou chargés ou non chargés et/ou de polymères réticulés, chargés ou réticulés non chargés.

7. Polymère, compound de polymère, matériau synthétique non chargé ou chargé, pouvant être obtenu selon un procédé selon les revendications 4 à 6.

8. Corps façonné, pouvant être obtenu selon un procédé selon les revendications 4 à 6.

9. Kit de polymère, comprenant un kit maître selon la revendication 1 ainsi que, en particulier séparément de celui-ci, comme autres composants un polymère thermoplastique de base, un polymère de base greffé par du silane, un polymère de base copolymérisé avec du silane, un monomère ou un prépolymère du polymère de base et/ou un mélange de ceux-ci.

10. Utilisation du kit maître selon la revendication 1 ou du kit de polymère selon la revendication 9 pour la préparation de compounds de polymères chargés et/ou non chargés et/ou de polymères réticulés, chargés ou réticulés non chargés à base de polymères thermoplastiques de base.
